(19)

Europäisches
Patentamt
European
Patent Office
Office européen
des brevets

(11) **EP 4 682 608 A2**

(12) **EUROPEAN PATENT APPLICATION**

(43) Date of publication:
**21.01.2026 Bulletin 2026/04**

(21) Application number: **25204215.5**

(22) Date of filing: **24.09.2025**

(51) International Patent Classification (IPC):
**G02B 9/64** *(2006.01)* **G02B 13/00** *(2006.01)*
**G02B 13/24** *(2006.01)*

(52) Cooperative Patent Classification (CPC):
**G02B 13/0045; G02B 9/64; G02B 13/24**

(84) Designated Contracting States:
**AL AT BE BG CH CY CZ DE DK EE ES FI FR GB
GR HR HU IE IS IT LI LT LU LV MC ME MK MT NL
NO PL PT RO RS SE SI SK SM TR**
Designated Extension States:
**BA**
Designated Validation States:
**GE KH LA MA MD TN**

(30) Priority: **30.09.2024 CN 202411389232**

(71) Applicant: **Jiangxi OFILM Optical Co. Ltd.
Nanchang, Jiangxi 330096 (CN)**

(72) Inventors:
• **LIU, Binbin
Shenzhen, 518106 (CN)**
• **ZHANG, Han
Nanchang, 330096 (CN)**

(74) Representative: **Metida
Gyneju str. 16
01109 Vilnius (LT)**

(54) **OPTICAL LENS, IMAGE MODULE, AND TERMINAL DEVICE**

(57) An optical lens (100) includes: a first lens (L1), a second lens (L2), and a fourth lens (L4) each having refractive power, a third lens (L3) and a sixth lens (L6) each having positive refractive power, a fifth lens (L5) and a seventh lens (L7) each having negative refractive power. An object side surface (S3) of the second lens (L2), an object side surface (S5) and an imaging side surface (S6) of the third lens (L3), and an object side surface (S11) of the sixth lens (L6) are both convex near the optical axis (O). An object side surface (S9) of the fifth lens (L5), an imaging side surface (S12) of the sixth lens (L6), and an imaging side surface (S14) of the seventh lens (L7) are both concave near the optical axis (O). The optical lens (100) satisfies: 2.6<FNO<4, and 50deg<FOV<90deg.

**FIG.1**

EP 4 682 608 A2

## Description

FIELD

The present invention relates to field of imaging, and in particular to an optical lens, an image module, and a terminal device.

BACKGROUND

Users of terminal devices such as mobile phones and tablet computers have many scenarios for shooting close-ups, such as capturing the fine details of objects like skin epidermis and microscopic insects. In such usage scenarios, optical lenses that can simultaneously meet the requirements of macro photography and high magnification while being suitable for small space ranges have obvious advantages. However, to further miniaturize the image module, the total length of the optical lens of the image module needs to be reduced. Therefore, under the requirement of miniaturization design, how to balance a large aperture and macro imaging is an urgent problem to be solved.

SUMMARY

The present disclosure discloses an optical lens, an image module, and a terminal device, which may achieve macro imaging while meeting the miniaturization design of optical lens.

In order to achieve the above objects, in a first aspect, the present application discloses an optical lens. The optical lens sequentially includes a first lens, a second lens, a third lens, a fourth lens, a fifth lens, a sixth lens, and a seventh lens along an optical axis from an object side to an imaging side. The first lens has refractive power. The second lens has refractive power, and an object side surface of the second lens is convex near the optical axis. The third lens has positive refractive power, an object side surface and an imaging side surface of the third lens are both convex near the optical axis. The fourth lens has refractive power. The fifth lens has negative refractive power, and an object side surface of the fifth lens is concave near the optical axis. The sixth lens has positive refractive power, an object side surface of the sixth lens is convex near the optical axis, and an imaging side surface of the sixth lens is concave near the optical axis. The seventh lens has negative refractive power, and an imaging side surface of the seventh lens is concave near the optical axis. The optical lens satisfying following conditional expressions: 2.6<FNO<4, and 50deg<FOV<90deg. FNO is an aperture number of the optical lens, and FOV is the maximum field of view of the optical lens.

In the above optical lens, in order to achieve a compact design while maintaining a large aperture and macro imaging capabilities, the refractive power and surface shape of the above-mentioned seven lenses are rationally configured. The first and second lenses have refractive power, and the object side surface of the second lens is convex near the optical axis, which is conducive to correcting the aberrations produced by the first and second lenses. The third lens has positive refractive power, and both its object side surface and imaging side surface are convex near the optical axis, which is beneficial for converging the incident light onto the third lens, allowing the light to entry more gentle. The fourth lens has refractive power, the fifth lens has negative refractive power, and the object side surface of the fifth lens is concave near the optical axis, which helps correct aberrations. The sixth lens has positive refractive power, the object side surface of the sixth lens is convex near the optical axis, and the imaging side surface of the sixth lens is concave near the optical axis, which is conducive to correcting spherical aberration and astigmatism produced by the previous lenses, thereby improving the imaging quality of the optical lens. The seventh lens has negative refractive power, and its imaging side surface is concave near the optical axis, which can also correct aberration of the optical lens and reduce the exit angle of the light, allowing more light to be concentrated on an imaging sensor of an image module. Additionally, the convex and concave design of the object side surface and the imaging side surface of the sixth lens can reduce a total length of the optical lens, thus achieving a compact design.

When the optical lens satisfies 50deg<FOV<90deg, the optical lens can be allowed to have a large field of view angle characteristic, thereby enabling the optical lens to have high pixel and high clarity imaging quality.

When the optical lens satisfies 2.6<FNO<4, the optical lens can have a large aperture characteristic, allowing the optical lens to have sufficient light intake and be suitable for use in environments such as at night or with insufficient light.

In a second aspect, the present application discloses an image module. The image module includes an imaging sensor and the above-mentioned optical lens, the imaging sensor is arranged on the imaging side of the optical lens. The image module with the above-mentioned optical lens can achieve a compact design while maintaining a large aperture and macro imaging capabilities.

In a third aspect, the present application discloses a terminal device. The terminal device includes a housing and the above-mentioned image module, the image module is arranged in the housing. The terminal device with the above-mentioned image module can achieve a compact design while maintaining a large aperture and macro imaging capabilities.

BRIEF DESCRIPTION OF THE DRAWINGS

To better describe and illustrate embodiments and/or examples of those inventions disclosed herein, reference may be made to one or more of the accompanying drawings. The additional details or examples used to describe the drawings should not be construed as limiting the scope of any of the disclosed inventions, the embodiments and/or examples presently described, and the best modes currently understood of these inventions.

FIG. 1 is a schematic structure diagram of an optical lens of a first embodiment of the present application.
FIG. 2 is a spherical aberration diagram, astigmatism curve diagram and distortion diagram of the optical lens of the first embodiment of the present application.
FIG. 3 is a schematic structure diagram of an optical lens of a second embodiment of the present application.
FIG. 4 is a spherical aberration diagram, astigmatism curve diagram and distortion diagram of the optical lens of the second embodiment of the present application.
FIG. 5 is a schematic structure diagram of an optical lens of a third embodiment of the present application.
FIG. 6 is a spherical aberration diagram, astigmatism curve diagram and distortion diagram of the optical lens of the third embodiment of the present application.
FIG. 7 is a schematic structure diagram of an optical lens of a fourth embodiment of the present application.
FIG. 8 is a spherical aberration diagram, astigmatism curve diagram and distortion diagram of the optical lens of the fourth embodiment of the present application.
FIG. 9 is a schematic structure diagram of an optical lens of a fifth embodiment of the present application.
FIG. 10 is a spherical aberration diagram, astigmatism curve diagram and distortion diagram of the optical lens of the fifth embodiment of the present application.
FIG. 11 is a schematic structure diagram of an optical lens of a sixth embodiment of the present application.
FIG. 12 is a spherical aberration diagram, astigmatism curve diagram and distortion diagram of the optical lens of the sixth embodiment of the present application.
FIG. 13 is a schematic diagram of an image module of an embodiment of the present application.
FIG. 14 is a schematic diagram of a terminal device of an embodiment of the present application.

DETAILED DESCRIPTION

The following will describe the technical solutions of the embodiments of the present disclosure clearly and completely in combination with the accompanying drawings of the embodiments of the present disclosure. Obviously, the described embodiments are only part of the embodiments of the present disclosure, not all of them. Based on the embodiments of the present disclosure, those skilled in the art can make various modifications or variations without departing from the spirit or scope of the present disclosure. All other embodiments obtained by persons of ordinary skill in the art without making creative efforts fall within the scope of protection of the present disclosure.

In addition, the terms "first", "second", etc. are mainly used to distinguish different devices, components, or parts (the specific types and constructions may be the same or different), and are not intended to indicate or imply the relative importance and quantity of the indicated devices, components, or parts. Unless otherwise specified, "multiple" means two or more.

The technical solution of the present application will be further explained in conjunction with the embodiments and accompanying drawings.

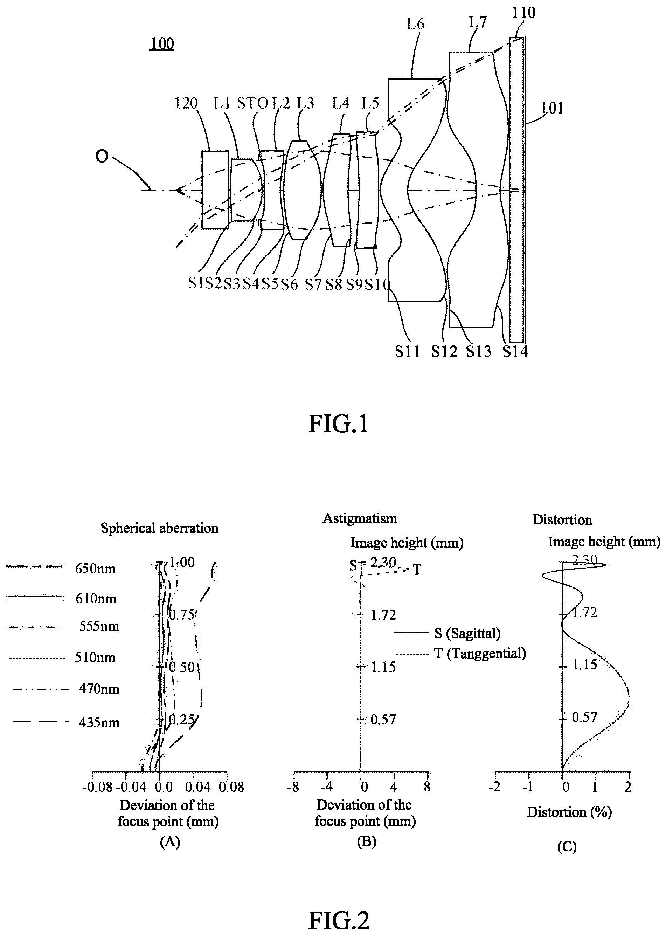

Referring to FIG. 1, in some embodiments of the present application, an optical lens 100 sequentially includes a first lens L1, a second lens L2, a third lens L3, a fourth lens L4, a fifth lens L5, a sixth lens L6, and a seventh lens L7 along an optical axis O from an object side to an imaging side. The first lens L1 has negative refractive power or positive refractive power, the second lens L2 has negative refractive power or positive refractive power, the third lens L3 has positive refractive power, the fourth lens L4 has negative refractive power or positive refractive power, the fifth lens L5 has negative refractive power, the sixth lens L6 has positive refractive power, the seventh lens L7 has negative refractive power. During imaging, light enters the first lens L1, the second lens L2, the third lens L3, the fourth lens L4, the fifth lens L5, the sixth lens L6, and the seventh lens L7 in that sequence from the object side of the first lens L1 and finally forms an image on an image plane 101 of the optical lens 100.

Further, an object side surface S1 of the first lens L1 is convex or concave near the optical axis O, an imaging side surface S2 of the first lens L1 is convex or concave near the optical axis O, an object side surface S3 of the second lens L2 is convex near the optical axis O, an imaging side surface S4 of the second lens L2 is convex or concave near the optical axis O, an object side surface S5 of the third lens L3 is convex near the optical axis O, an imaging side surface S6 of the third lens L3 is convex near the optical axis O, an object side surface S7 of the fourth lens L4 is convex or concave near the optical axis O, an imaging side surface S8 of the fourth lens L4 is convex or concave near the optical axis O, an object side surface S9 of the fifth lens L5 is concave near the optical axis O, an imaging side surface S10 of the fifth lens L5 is convex or concave near the optical axis O, an object side surface S11 of the sixth lens L6 is convex near the optical axis O, an imaging side surface S12 of the sixth lens L6 is concave near the optical axis O, an object side surface S13 of the seventh lens L7 is convex or concave near the optical axis O, and an imaging side surface S14 of the seventh lens L7 is concave near the optical axis O.

In some embodiments, the above-mentioned seven lenses may all be made of plastic, which can reduce the overall weight of the optical lens 100 and facilitate the processing of complex surface shapes. In some embodiment, the above-mentioned seven lenses may all be made of glass, or among the above-mentioned seven lenses, some lenses may be made of glass and some may be made of plastic.

In some embodiments, the first lens L1 to the seventh lens L7 may all be aspheric lenses, or the first lens L1 to the seventh lens L7 may all be spherical lenses.

In some embodiments, the optical lens 100 may further include an aperture STO, and the aperture STO may be arranged between any two adjacent lenses. For example, the aperture STO may be arranged between the first lens L1 and the second lens L2, or the aperture STO may be arranged between the second lens L2 and the third lens L3.

In some embodiments, the optical lens 100 may further include a filter 110, and the filter 110 is arranged between the imaging side surface S14 of the seventh lens L7 and the image plane 101 of the optical lens 100. In some embodiments, the filter 110 may be an infrared cut-off filter to filter out infrared light and allow visible light to pass through, thereby allowing the imaging more in line with human visual experience. In some embodiments, the filter 110 may be an infrared bandpass filter to filter out visible light and allow infrared light to pass through, thereby improving the imaging quality. The optical lens 100 can be used as an infrared optical lens, the optical lens 100 can image and obtain good imaging quality even in dim environments and other special application scenarios. In some embodiments, the filter 110 may be made of glass. Of course, in some embodiments, the filter 110 may be made of optical glass with a coating, or other materials, and the specific choice can be made according to actual needs, and no specific limitations are made in this embodiment.

In some embodiments, the optical lens 100 may further include a flat glass 120, which is arranged between the object side of the optical lens 100 and the object side surface S1 of the first lens L1.

In some embodiments, the optical lens 100 may satisfy the following conditional expression: 1.5<TTL/ImgH<3. Wherein, TTL is a distance from the object side surface S1 of the first lens L1 to the image plane IMG of the optical lens 100 along the optical axis O (that is, a total length of the optical lens 100), ImgH is half of an image height corresponding to the maximum field of view angle of the optical lens 100. When the optical lens 100 satisfies the above conditional expression, it helps to improve the resolution of the optical lens 100 across the entire field of view, especially the imaging quality at the edge of the field of view, thereby enhancing the imaging quality. At the same time, through the limitation of the above conditional expression, the combination of the lenses in the optical lens 100 can be made more compact, thereby achieving a miniaturized and thin design while meeting the requirements of high pixel and high imaging quality. Further, the optical lens 100 may satisfy the following conditional expression: 1.8<TTL/ImgH<2.8, which is more conducive to the miniaturized and thin design of the optical lens 100.

In some embodiments, the optical lens 100 may satisfy the following conditional expression: 9<TTL/f<14. Wherein, f is a focal length of the optical lens 100. When the optical lens 100 satisfies the above conditional expression, it can reasonably control a total length and a distribution of a refractive power of the optical lens 100. When below the lower limit of the above conditional expression, the total length of the optical lens 100 is too short, which will increase the sensitivity of the optical lens 100 and cause difficulties in correcting the aberration of the optical lens 100. When exceeding the upper limit of the above conditional expression, the total length of the optical lens 100 is too long, which will cause the angle of the light entering an imaging sensor of an image module to be too large, thereby failing to match the imaging sensor and affecting the final imaging.

In some embodiments, the optical lens 100 may satisfy the following conditional expression: 2<ImgH/ObjH<3.5. Wherein, ObjH is an object height of the optical lens. When the optical lens 100 satisfies the above conditional expression, it can reasonably control a ratio of the image height to the object height of the optical lens 100, thereby allowing for clearer imaging. Further, the optical lens 100 may satisfy the following conditional expression: 2.3<ImgH/ObjH<3, so that the imaging quality of the optical lens 100 is higher.

In some embodiments, the optical lens 100 may satisfy the following conditional expression: 50deg<FOV<90deg. Wherein, FOV is the maximum field of view angle of the optical lens 100. When the optical lens 100 satisfies the above conditional expression, the optical lens 100 can be allowed to have a large field of view angle characteristic, thereby enabling the optical lens 100 to have high pixel and high clarity imaging quality.

In some embodiments, the optical lens 100 may satisfy the following conditional expression: 20deg/mm<FOV/ImgH<40deg/mm. When the optical lens 100 satisfies the above conditional expression, it can be conducive to achieving a miniaturized and wide-angle characteristic of the optical lens 100, and at the same time, it can match a higher pixel image sensor, thereby achieving high-definition shooting. Further, the optical lens 100 may satisfy the following conditional expression: 21deg/mm<FOV/ImgH<38deg/mm, thereby further achieving high-definition shooting of the optical lens 100.

In some embodiments, the optical lens 100 may satisfy the following conditional expression: 90deg/mm<FOV/f. When the optical lens 100 satisfies the above conditional expression, the field of view angle of the optical lens 100 is large, which can effectively increase a picture-taking area and allow the optical lens 100 to have a certain macro capability, thereby improving the optical lens's ability to capture low-frequency details and meeting the design requirements of high image quality. Further, the optical lens 100 may satisfy the following conditional expression: 100deg/mm<FOV/f<250deg/mm, thereby achieving better imaging quality of the optical lens 100.

In some embodiments, the optical lens 100 may satisfy the following conditional expression: 0.3<NA<0.6. Wherein, NA is a numerical aperture of the object side of the optical lens. When the optical lens 100 satisfies the above conditional expression, it can ensure that the optical lens 100 has a large aperture characteristic, allowing the optical lens 100 to have sufficient light intake, allowing the captured images to be clearer, and enabling high-quality shooting in low-light object space scenes. Further, the optical lens 100 may satisfy the following conditional expression: 0.35<NA<0.5, thereby allowing the large aperture characteristic of the optical lens 100 to be more prominent, and being more conducive to shooting in low-light environments.

In some embodiments, the optical lens 100 may satisfy the following conditional expression: 2.6<FNO<4. Wherein, FNO is an aperture number of the optical lens 100. When the optical lens 100 satisfies the above conditional expression, the optical lens 100 can have a large aperture characteristic, allowing the optical lens 100 to have sufficient light intake and be suitable for use in environments such as at night or with insufficient light. Further, the optical lens 100 may satisfy the following conditional expression: 2.8<FNO<3.5, thereby allowing the large aperture characteristic of the optical lens 100 to be more prominent, and being more conducive to shooting in low-light environments.

In some embodiments, the optical lens 100 may satisfy the following conditional expression: 0.2mm<u<1mm. Wherein, u is an object distance of the optical lens 100. When the optical lens 100 satisfies the above conditional expression, the optical lens 100 can achieve super macro photography, thereby better showcasing the details of small objects. Further, the optical lens 100 may satisfy the following conditional expression: 0.35mm<u<0.85mm, thereby enhancing the optical lens's ability to display the details of small objects.

In some embodiments, the optical lens 100 may satisfy the following conditional expression: $2.5<|f1|/f<10$, wherein f1 is a focal length of the first lens L1. When the optical lens 100 satisfies the above conditional expression, the optical power of the first lens L1 will not be too strong, thereby enabling the correction of high-order spherical aberration and ensuring good imaging quality of the optical lens 100.

In some embodiments, the optical lens 100 may satisfy the following conditional expression: $3<|f2|/f<8$, wherein f2 is a focal length of the second lens L2. When the optical lens 100 satisfies the above conditional expression, the optical power of the second lens L2 will not be too strong, enabling the correction of high-order spherical aberration and ensuring good imaging quality of the optical lens 100.

In some embodiments, the optical lens 100 may satisfy the following conditional expression: 2<f3/f, wherein, f3 is a focal length of the third lens L3. When the optical lens 100 satisfies the above conditional expression, the third lens L3 provides positive refractive power to the optical lens 100. Therefore, by controlling a ratio of the focal length of the third lens L3 to the focal length of the optical lens 100, the optical power of the third lens L3 can be kept within a reasonable range, thereby reducing the aberration produced by the front lens group (i.e., the first lens L1, the second lens L2), and thus improving the imaging quality of the optical lens 100. Further, the optical lens 100 may satisfy the following conditional expression: 2.3<f3/f<6, which is more conducive to high-quality imaging of the optical lens 100.

In some embodiments, the optical lens 100 may satisfy the following conditional expression: 2<f4/f, wherein, f4 is a focal length of the fourth lens L4. When the optical lens 100 satisfies the above conditional expression, the fourth lens L4 can provide a portion of positive or negative refractive power, thereby adjusting the overall refractive power of the optical lens 100 and forming a quasi-symmetric structure with the first lens L1, the second lens L2, and the third lens L3. This can balance the distortion produced by the front lens group (i.e., the first lens L1 to the third lens L3) and avoid high-order aberration caused by excessive refractive index. Further, the optical lens 100 may satisfy the following conditional expression: 3<f4/f<12, thereby enhancing the aberration correction capability of the optical lens.

In some embodiments, the optical lens 100 may satisfy the following conditional expression: f5/f<-2, wherein, f5 is a focal length of the fifth lens L5. When the optical lens 100 satisfies the above conditional expression, the negative refractive power provided by the fifth lens L5 is reasonable, which is conducive to correcting the aberration of the optical lens 100 and improving the imaging quality of the optical lens 100. Further, the optical lens 100 may satisfy the following conditional expression: -11<f5/f<-3, thereby achieving higher imaging quality of the optical lens 100.

In some embodiments, the optical lens 100 may satisfy the following conditional expression: 2<f6/f<6, wherein, f6 is a focal length of the sixth lens L6. When the optical lens 100 satisfies the above conditional expression, the spherical aberration and coma aberration contributions of the sixth lens L6 can be reasonably allocated, thereby ensuring good imaging quality in the on-axis region of the optical lens 100.

In some embodiments, the optical lens 100 may satisfy the following conditional expression: -5<f7/f<-1.5, wherein, f7 is a focal length of the seventh lens L7. When the optical lens 100 satisfies the above conditional expression, it can reduce the deflection angle of the light passing through the seventh lens L7, lower the sensitivity of the seventh lens L7, and also reduce the aberrations such as astigmatism and distortion produced by the lens group in front of the seventh lens L7, thereby improving the imaging quality of the optical lens 100. Further, the optical lens 100 may satisfy the following conditional expression: -4<f7/f<-2, thereby achieving higher imaging quality of the optical lens 100.

In some embodiments, the optical lens 100 may satisfy the following conditional expression: 0.65<f3/n3<1.65, wherein, n3 is a refractive index of the third lens L3. When the optical lens 100 satisfies the above conditional expression, it can achieve a reasonable distribution of the refractive power between the third lens L3 and other lenses, thereby enabling the optical lens 100 to support aberration balance and imaging quality improvement under different materials, and also allowing it easier to compress the air gap between the first lens L1 and the third lens L3, improving the assembly compactness of the optical lens 100 and avoiding stray light interference. Further, the optical lens 100 may satisfy the following conditional expression: 0.75<f3/n3<1.5, which is further beneficial to the assembly compactness of the optical lens.

In some embodiments, the optical lens 100 may satisfy the following conditional expression: 4<|R1|/f, wherein, R1 is a curvature radius of the object side surface S1 of the first lens L1 at the optical axis O. When the optical lens 100 satisfies the above conditional expression, the curvature radius of the object side surface S1 of the first lens L1 at the optical axis can be effectively controlled, thereby effectively balancing the low-order aberrations of the optical lens 100 and ensuring good imaging quality of the optical lens 100.

In some embodiments, the optical lens 100 may satisfy the following conditional expression: 1<|R2|/f, wherein, R2 is a curvature radius of the imaging side surface S2 of the first lens L1 at the optical axis O. When the optical lens 100 satisfies the above conditional expression, the curvature radius of the imaging side surface S2 of the first lens L1 at the optical axis can be effectively controlled, thereby effectively balancing the low-order aberrations of the optical lens 100 and ensuring good imaging quality of the optical lens 100.

In some embodiments, the optical lens 100 may satisfy the following conditional expression: 2<R3/f, wherein, R3 is a curvature radius of the object side surface S3 of the second lens L2 at the optical axis O. When the optical lens 100 satisfies the above conditional expression, the curvature radius of the object side surface S3 of the second lens L2 at the optical axis can be effectively controlled, thereby effectively balancing the low-order aberrations of the optical lens 100 and ensuring good imaging quality of the optical lens 100. Further, the optical lens 100 may satisfy the following conditional expression: 3<R3/f<7, so that the optical lens 100 has a better ability to balance low-order aberrations.

In some embodiments, the optical lens 100 may satisfy the following conditional expression: 1.5<|R4|/f<4, wherein, R4 is a curvature radius of the imaging side surface S4 of the second lens L2 at the optical axis O. When the optical lens 100 satisfies the above conditional expression, the curvature radius of the imaging side surface S4 of the second lens L2 at the optical axis can be effectively controlled, thereby effectively balancing the low-order aberrations of the optical lens 100 and ensuring good imaging quality of the optical lens 100.

In some embodiments, the optical lens 100 may satisfy the following conditional expression: 1.5<R5/f, wherein, R5 is a curvature radius of the object side surface S5 of the third lens L3 at the optical axis O. When the optical lens 100 satisfies the above conditional expression, the astigmatism of the third lens L3 can be kept within a reasonable range and the astigmatism produced by the previous lenses can be effectively balanced, thereby ensuring good imaging quality of the optical lens 100.

In some embodiments, the optical lens 100 may satisfy the following conditional expression: R6/f<-2, wherein, R6 is a curvature radius of the imaging side surface S6 of the third lens L3 at the optical axis O. When the optical lens 100 satisfies the above conditional expression, the curvature radius of the imaging side surface S6 of the third lens L3 at the optical axis can be effectively controlled, thereby effectively balancing the astigmatism produced by the previous lenses and ensuring good imaging quality of the optical lens 100. Further, the optical lens 100 may satisfy the following conditional expression: -9<R6/f<-2.5, so that the imaging quality of the optical lens 100 is even higher.

In some embodiments, the optical lens 100 may satisfy the following conditional expression: 3<|R7|/f<15, wherein, R7 is a curvature radius of the object side surface S7 of the fourth lens L4 at the optical axis O. When the optical lens 100 satisfies the above conditional expression, the curvature radius of the object side surface S7 of the fourth lens L4 at the optical axis can be effectively controlled, thereby effectively balancing the astigmatism produced by the previous lenses and ensuring good imaging quality of the optical lens 100.

In some embodiments, the optical lens 100 may satisfy the following conditional expression: 2.8<|R8|/f, wherein, R8 is a curvature radius of the imaging side surface S8 of the fourth lens L4 at the optical axis O. When the optical lens 100 satisfies the above conditional expression, the curvature radius of the imaging side surface S8 of the fourth lens L4 at the optical axis can be effectively controlled, thereby effectively balancing the astigmatism produced by the previous lenses and ensuring good imaging quality of the optical lens 100.

In some embodiments, the optical lens 100 may satisfy the following conditional expression: R9/f<-1.2, wherein, R9 is a curvature radius of the object side surface S9 of the fifth lens L5 at the optical axis O. When the optical lens 100 satisfies the above conditional expression, the deflection angle of light in the fifth lens L5 can be reduced, thereby reducing the sensitivity of the fifth lens L5 and keeping the astigmatism of the fifth lens L5 within a reasonable range, so that the optical lens 100 can have good imaging quality. Further, the optical lens 100 may satisfy the following conditional expression: R9/f<-1.4, resulting in higher imaging quality of the optical lens 100.

In some embodiments, the optical lens 100 may satisfy the following conditional expression: 0.9<R11/f<1.5, wherein, R11 is a curvature radius of the object side surface S11 of the sixth lens L6 at the optical axis O. When the optical lens 100 satisfies the above conditional expression, the curvature radius of the object side surface S11 of the sixth lens L6 at the optical axis can be effectively controlled, thereby effectively balancing the spherical aberration and coma aberration generated by the lenses in front of the sixth lens L6, which is beneficial to improving the imaging quality of the optical lens 100.

In some embodiments, the optical lens 100 may satisfy the following conditional expression: $1.2<R12/f<2$, wherein, R12 is a curvature radius of the imaging side surface S12 of the sixth lens L6 at the optical axis O. When the optical lens 100 satisfies the above conditional expression, the curvature radius of the imaging side surface S12 of the sixth lens L6 at the optical axis can be effectively controlled, thereby effectively balancing the spherical aberration and coma aberration generated by the lenses in front of the sixth lens L6, which is beneficial to improving the imaging quality of the optical lens 100.

In some embodiments, the optical lens 100 may satisfy the following conditional expression: $|R13|/f>9$, wherein, R13 is a curvature radius of the object side surface S13 of the seventh lens L7 at the optical axis O. When the optical lens 100 satisfies the above conditional expression, the curvature radius of the object side surface S13 of the seventh lens L7 at the optical axis can be effectively controlled, thereby keeping the astigmatism of the seventh lens L7 within a reasonable range and effectively balancing the astigmatism generated by the lenses in front of the seventh lens L7, which is beneficial to improving the imaging quality of the optical lens 100.

In some embodiments, the optical lens 100 may satisfy the following conditional expression: $1.1<R14/f<2.3$, wherein, R14 is a curvature radius of the imaging side surface S14 of the seventh lens L7 at the optical axis O. When the optical lens 100 satisfies the above conditional expression, the curvature radius of the imaging side surface S14 of the seventh lens L7 at the optical axis can be effectively controlled, thereby keeping the astigmatism of the seventh lens L7 within a reasonable range and effectively balancing the astigmatism generated by the lenses in front of the seventh lens L7.

In some embodiments, the optical lens 100 may satisfy the following conditional expression: $0.2<CT1/CT2$, wherein, CT1 is a thickness of the first lens L1 at the optical axis O, and CT2 is a thickness of the second lens L2 at the optical axis O. When the optical lens 100 satisfies the above conditional expression, the thickness and refractive power of the first lens L1 and the second lens L2 can be optimized, thereby avoiding excessive spherical aberration generated by the front lens group, improving the overall resolution of the optical lens 100 and reducing the thickness sensitivity of the optical lens 100. Further, the optical lens 100 may satisfy the following conditional expression: $0.3<CT1/CT2<6$, which results in better overall resolution of the optical lens.

In some embodiments, the optical lens 100 may satisfy the following conditional expression: $1<CT3/CT4<3.4$, wherein, CT3 is a thickness of the third lens L3 at the optical axis O, and CT4 is a thickness of the fourth lens L4 at the optical axis O. When the optical lens 100 satisfies the above conditional expression, the thickness of the third lens L3 is greater than the thickness of the fourth lens L4, which can allow the third lens L3 and the fourth lens L4 to have better thickness uniformity, reduce the thickness sensitivity of the optical lens 100, and also be beneficial to balancing the field curvature of the optical lens 100. Further, the optical lens 100 may satisfy the following conditional expression: $1.1<CT3/CT4<3.2$, which results in better field curvature balancing ability of the optical lens.

In some embodiments, the optical lens 100 may satisfy the following conditional expression: $0.7<CT3/CT5<3.2$, wherein, CT5 is a thickness of the fifth lens L5 at the optical axis O. When the optical lens 100 satisfies the above conditional expression, the third lens L3 and the fifth lens L5 can have better thickness uniformity, reduce the thickness sensitivity of the optical lens 100, and also be beneficial to balancing the field curvature of the optical lens 100. Further, the optical lens 100 may satisfy the following conditional expression: $0.8<CT3/CT5<2.9$, which results in better field curvature balancing ability of the optical lens.

In some embodiments, the optical lens 100 may satisfy the following conditional expression: $0.9<CT3/CT2<3.2$, which can ensure that a thickness ratio of the third lens L3 to the second lens L2 is arranged within a reasonable range, thereby reducing the thickness sensitivity of the optical lens 100 and facilitating the balance of the field curvature of the optical lens 100. Further, the optical lens 100 may satisfy the following conditional expression: $1<CT3/CT2<2.9$, thereby enhancing the field curvature balancing ability of the optical lens.

In some embodiments, the optical lens 100 may satisfy the following conditional expression: $0.4<CT3/CT1<3.1$, it can ensure that a center thickness ratio of the third lens L3 to the first lens L1 is arranged within a reasonable range, which is beneficial for ensuring that the optical lens 100 has good uniformity, reducing the thickness sensitivity of the optical lens 100, and further facilitating the balance of the field curvature of the optical lens 100, thereby enhancing the field curvature balancing ability of the optical lens.

In some embodiments, the optical lens 100 may satisfy the following conditional expression: $0.9<AT67/(CT6+CT7)<1.9$, wherein, CT6 is a thickness of the sixth lens L6 at the optical axis O, CT7 is a thickness of the seventh lens L7 at the optical axis O, and AT67 is a distance from the imaging side surface of the sixth lens to the object side surface of the seventh lens at the optical axis. Since the rationality of thickness and gap directly affects the difficulty of lens molding and manufacturing, when the optical lens 100 satisfies the above conditional expression, the thickness of the sixth lens L6 and the thickness of the seventh lens L7 can be maintained appropriately, and a distance between the sixth lens L6 and the seventh lens L7 is also reasonable, thereby effectively improving the performance of the optical lens 10 and facilitating the forming and assembly of the sixth lens L6 and the seventh lens L7. Further, the optical lens 100 may satisfy the following conditional expression: 1.1<AT67/(CT6+CT7)<1.7, which is beneficial for the assembly of the sixth lens L6 and the seventh lens L7.

In some embodiments, the optical lens 100 may satisfy the following conditional expression: 1.2<TD/(CT1+CT2+CT3+CT4+CT5)<2.7, wherein TD is a distance from the object side surface of the first lens to the imaging side surface of the seventh lens at the optical axis. When the optical lens 100 satisfies the above conditional expression, the thickness values of the first lens L1 to the fifth lens L5 can be reasonably configured, thereby optimizing the size and the refractive power of the first lens L1 to the fifth lens L5, avoiding excessive spherical aberration generated by the lens group, reducing the sensitivity of the lens group, and thus improving the imaging quality of the optical lens 100. Further, the optical lens 100 may satisfy the following conditional expression: 1.5<TD/(CT1+CT2+CT3+CT4+CT5)<2.4, which further improves the imaging quality of the optical lens 100.

In some embodiments, the optical lens 100 may satisfy the following conditional expression: 0.9<ET7/CT7<2.7, wherein ET7 is a distance from the maximum effective semi-aperture of the object side surface of the seventh lens to the maximum effective semi-aperture of the imaging side surface of the seventh lens. When the optical lens 100 satisfies the above conditional expression, the edge thickness and center thickness of the seventh lens L7 can be maintained within a reasonable range, thereby ensuring that the seventh lens L7 has good optical performance and molding yield, and also ensuring good assembly stability of the seventh lens L7. Further, the optical lens 100 may satisfy the following conditional expression: 1<ET7/CT7<2.5, which further improves the assembly stability of the seventh lens L7.

In some embodiments, the optical lens 100 may satisfy the following conditional expression: -1.9<SAG13/CT7<-0.6, wherein SAG13 is a distance between the maximum effective aperture of the object side surface of the seventh lens to an intersection point of the object side surface of the seventh lens and the optical axis in the direction of the optical axis. When the optical lens 100 satisfies the above conditional expression, the surface shape and the thickness of the seventh lens L7 can be reasonably configured, thereby ensuring that the seventh lens L7 has good optical performance and molding yield, and also ensuring that the seventh lens L7 has good assembly stability. Further, the optical lens 100 may satisfy the following conditional expression: -1.7<SAG13/CT7<-0.7, which further improves the assembly stability of the seventh lens L7.

In some embodiments, the optical lens 100 may satisfy the following conditional expression: 2.3<(|f1|+|f2|)/|f7|<6, the spherical aberration contribution of the first lens L1, the second lens L2, and the seventh lens L7 can be reasonably allocated, thereby ensuring that the optical lens 100 has good imaging quality. Further, the optical lens 100 may satisfy the following conditional expression: 2.7<(|f1|+|f2|)/|f7|<5, which further improves the imaging quality of the optical lens.

In some embodiments, the optical lens 100 may satisfy the following conditional expression: 0.2<CT1/SD1<2, wherein SD1 is the maximum effective semi-diameter on the object side surface of the first lens. When the optical lens 100 satisfies the above conditional expression, the first lens L1 can have good optical performance and molding yield, and also ensure good assembly stability. Further, the optical lens 100 may satisfy the following conditional expression: 0.27<CT1/SD1<1.8, which is beneficial to improving the assembly stability of the optical lens.

In some embodiments, the optical lens 100 may satisfy the following conditional expression: 0.7<SD10/SD1<2.7, wherein SD10 is the maximum effective semi-diameter on the imaging side surface of the fifth lens. When the optical lens 100 satisfies the above conditional expression, the light can be better guided into the fifth lens L5, thereby improving the imaging quality of the optical lens 100. Further, the optical lens 100 may satisfy the following conditional expression: 0.8<SD10/SD1<2.3, which is beneficial to improving the imaging quality of the optical lens.

In some embodiments, the optical lens 100 may satisfy the following conditional expression: 2<SD14/SD1<6, wherein SD14 is the maximum effective semi-diameter of the imaging side surface of the seventh lens. When the optical lens 100 satisfies the above conditional expression, the deflection angle of the light from the edge field of view entering the imaging sensor can be effectively reduced, the matching degree between the optical lens 100 and the imaging sensor can be increased, and at the same time, the off-axis field of view astigmatism can be improved, thereby enhancing the overall imageing quality. Further, the optical lens 100 may satisfy the following conditional expression: 2.5<SD14/SD1<5.3, which is beneficial for high-quality imaging of the optical lens.

In some embodiments, the optical lens 100 may satisfy the following conditional expression: 3<ImgH/SD1<6, it can effectively ensure the sensitivity of the optical lens 100 and guarantee the imaging quality of the optical lens 100. Further, the optical lens 100 may satisfy the following conditional expression: 3.2<ImgH/SD1<5.8, thereby providing better imaging quality for the optical lens.

The optical lens 100 of the present disclosure will be described in detail below with reference to specific parameters.

First embodiment

FIG. 1 is a schematic structural diagram of the optical lens 100 of the first embodiment, the optical lens 100 sequentially includes a flat glass 120, a first lens L1, an aperture STO, a second lens L2, a third lens L3, a fourth lens L4, a fifth lens L5, a sixth lens L6, a seventh lens L7, and a filter 110 along an optical axis O from an object side to an imaging side.

In the illustrated embodiment, the first lens L1 has positive refractive power, the second lens L2 has negative refractive power, third lens L3 has positive refractive power, the fourth lens L4 has positive refractive power, the fifth lens L5 has negative refractive power, the sixth lens L6 has positive refractive power, and the seventh lens L7 has negative refractive power.

Further, an object side surface S1 and an imaging side surface S2 of the first lens L1 are both convex near the optical axis O; an object side surface S3 of the second lens L2 is convex near the optical axis O, an imaging side surface S4 of the second lens L2 is concave near the optical axis O; an object side surface S5 and an imaging side surface S6 of the third lens L3 are both convex near the optical axis O; an object side surface S7 and an imaging side surface S8 of the fourth lens L4 are respectively convex and concave near the optical axis; an object side surface S9 and an imaging side surface S10 of the fifth lens L5 are both concave near the optical axis O; an object side surface S11 and an imaging side surface S12 of the sixth lens L6 are respectively convex and concave near the optical axis; an object side surface S13 and an imaging side surface S14 of the seventh lens L7 are both concave near the optical axis O.

The parameters of the optical lens 100 are given in Table 1 below. The components from the object side to the image side along the optical axis of the optical lens 100 are arranged in the order from top to bottom in Table 1. In the same lens, a surface with a smaller surface number is the object side surface of the lens, and a surface with a larger surface number is the imaging side surface of the lens. For example, surface number 3 and 4 correspond to the object side surface S1 and imaging side surface S2 of the first lens L1, respectively. The radius Y in Table 1 is the radius of curvature of the object side surface or the imaging side surface with the corresponding surface number at the optical axis. The first value in the "Thickness" parameter column of the lens is the thickness of the lens at the optical axis, and the second value is a distance from the imaging side surface of the lens to a rear surface in an imaging side direction on the optical axis. The value of the aperture STO in the "Thickness" parameter column is a distance from the aperture STO to a vertex of a latter surface in an imaging side direction (the vertex refers to an intersection of the latter surface and the optical axis) on the optical axis, and by default, a direction from the object side surface of the first lens L1 to the imaging side surface of the last lens is a positive direction of the optical axis. When the value of the aperture STO in the "Thickness" parameter column is negative, it indicates that the aperture STO is arranged on the image side of the vertex of the latter surface. When the value of the aperture STO in the "Thickness" parameter column is a positive value, the aperture STO is arranged on the object side of the vertex of the latter surface. It can be understood that the units of the Y radius, the thickness, and the focal length in Table 1 are all mm. The refractive index and Abbe number in Table 1 are obtained at the reference wavelength of 587.6 nm, and the focal length is obtained at the reference wavelength of 555 nm.

Table 1

| First embodiment | | | | | | | | |
|---|---|---|---|---|---|---|---|---|
| f=0.366mm, NA=0.45, FOV=87.33deg, TTL=5mm | | | | | | | | |
| Surface number | Surface name | Surface type | Y radius | Thickness | Material | Refractive index | Abbe number | Focal length |
| OBJ | Object side | sphere | infinity | 0.4000 | | | | |
| 1 | Flat glass | sphere | infinity | 0.4000 | glass | 1.5183 | 64.17 | |
| 2 | | sphere | infinity | 0.0300 | | | | |
| 3 | First lens | asphere | 2.7883 | 0.4971 | plastic | 1.5461 | 55.93 | 1.3638 |
| 4 | | asphere | -0.9522 | -0.0523 | | | | |
| STO | Aperture | sphere | infinity | 0.0823 | | | | |
| 5 | Second lens | asphere | 2.4740 | 0.2500 | plastic | 1.6939 | 18.4000 | -2.7190 |
| 6 | | asphere | 1.0261 | 0.0546 | | | | |
| 7 | Third lens | asphere | 2.5910 | 0.5789 | plastic | 1.5315 | 56.5567 | 2.0201 |
| 8 | | asphere | -1.7005 | 0.0300 | | | | |
| 9 | Fourth lens | asphere | 1.2689 | 0.3872 | plastic | 1.5400 | 55.8000 | 3.8485 |
| 10 | | asphere | 2.8940 | 0.1728 | | | | |
| 11 | Fifth lens | asphere | -3.3309 | 0.3000 | plastic | 1.6608 | 20.4200 | -3.6806 |
| 12 | | asphere | 9.6513 | 0.0300 | | | | |

(continued)

| First embodiment | | | | | | | | |
|---|---|---|---|---|---|---|---|---|
| f=0.366mm, NA=0.45, FOV=87.33deg, TTL=5mm | | | | | | | | |
| Surface number | Surface name | Surface type | Y radius | Thickness | Material | Refractive index | Abbe number | Focal length |
| 13 | Sixth lens | asphere | 0.4302 | 0.4218 | plastic | 1.5400 | 55.8000 | 1.7919 |
| 14 | | asphere | 0.5063 | 1.0551 | | | | |
| 15 | Seventh lens | asphere | -3.3658 | 0.3722 | plastic | 1.5714 | 36.40 | -1.1012 |
| 16 | | asphere | 0.8100 | 0.1500 | | | | |
| 17 | Filter | sphere | infinity | 0.2100 | glass | 1.5183 | 64.20 | |
| 18 | | sphere | infinity | 0.0102 | | | | |
| IMG | Imaging surface | sphere | infinity | 0.0200 | | | | |

In the first embodiment, the object side surfaces and the imaging side surfaces of the first lens L1 to the seventh lens L7 are both aspheric surfaces. The surface shape x of the aspheric surface can be defined by, but not limited to, the following aspherical formula:

$$x = \frac{ch^2}{1+\sqrt{1-(K+1)c^2h^2}} + \sum Aih^i \; ;$$

Wherein, x is a height distance along the optical axis from a position of the aspheric surface at height h to the vertex of the aspheric surface; c is a curvature of the vertex of the aspheric surface, and c=1/Y (that is, the curvature of the vertex of the aspheric surface c is the reciprocal of the Y radius in the above Table 1); K is the cone coefficient; Ai is the coefficient corresponding to the i-th higher-order term of the aspheric surface. Table 2 shows the higher-order term coefficients A4, A6, A8, A10, A12, A14, A16, A18, and A20 of the aspheric surfaces of the first lens L1 to the seventh lens L7, in addition, further shows the higher-order term coefficients A22, A24, A26, and A28 of the object side surfaces and the imaging side surfaces of the sixth lens L6 and the seventh lens L7.

Table 2

| First embodiment | | | | | |
|---|---|---|---|---|---|
| Surface number | K | A4 | A6 | A8 | A10 |
| 3 | 1.23160E+01 | -2.68160E-01 | 3.67150E+00 | -2.49440E+02 | 7.09020E+03 |
| 4 | 2.67090E+00 | -4.56430E+00 | 1.08790E+02 | -1.66150E+03 | 1.79580E+04 |
| 5 | 0.00000E+00 | -6.01830E+00 | 8.98800E+01 | -1.27850E+03 | 1.34620E+04 |
| 6 | -5.89830E+00 | -1.56120E+00 | 7.31880E+00 | -2.78590E+01 | 3.80160E+01 |
| 7 | 6.36770E+00 | 3.37140E-01 | -5.91310E+00 | 4.62590E+01 | -2.64820E+02 |
| 8 | 3.78700E+00 | 3.71730E-01 | -5.55080E+00 | 2.12750E+01 | -7.86010E+01 |
| 9 | -1.93430E+00 | 1.03020E-01 | -8.15430E-01 | -3.21920E+00 | 1.46010E+01 |
| 10 | -6.06690E+00 | -7.02650E-01 | 6.74700E+00 | -2.97680E+01 | 6.40560E+01 |
| 11 | 0.00000E+00 | 1.32740E+00 | -1.16200E+01 | 6.00010E+01 | -1.96370E+02 |
| 12 | 5.72820E+01 | -8.93970E-02 | -5.91130E+00 | 3.75340E+01 | -1.26000E+02 |
| 13 | -2.16570E+00 | -8.40640E-02 | -4.28280E-01 | 1.01410E+00 | 1.96670E+00 |
| 14 | -2.27510E+00 | 9.40370E-01 | -3.61730E+00 | 6.02670E+00 | -6.58970E+00 |
| 15 | -6.59390E+00 | -1.77200E+00 | 3.24450E+00 | -3.25060E+00 | 2.80450E+00 |
| 16 | -7.24610E+00 | -5.59780E-01 | 1.14830E+00 | -1.75670E+00 | 1.87090E+00 |

(continued)

| Surface number | A12 | A14 | A16 | A18 | A20 |
|---|---|---|---|---|---|
| 3 | -1.18750E+05 | 1.19200E+06 | -7.09160E+06 | 2.30340E+07 | -3.15310E+07 |
| 4 | -1.34230E+05 | 6.69540E+05 | -2.09290E+06 | 3.64550E+06 | -2.61230E+06 |
| 5 | -1.02060E+05 | 5.30440E+05 | -1.77770E+06 | 3.44240E+06 | -2.91350E+06 |
| 6 | 1.64760E+02 | -7.02220E+02 | 3.27410E+02 | 2.06520E+03 | -2.63260E+03 |
| 7 | 1.14920E+03 | -3.38080E+03 | 6.15220E+03 | -6.21620E+03 | 2.66920E+03 |
| 8 | 3.80710E+02 | -1.34430E+03 | 2.81510E+03 | -3.13540E+03 | 1.43710E+03 |
| 9 | -2.02480E+01 | 1.46130E+01 | -1.30770E+01 | 1.37920E+01 | -5.88770E+00 |
| 10 | -7.43620E+01 | 5.23680E+01 | -3.51950E+01 | 2.65000E+01 | -9.96690E+00 |
| 11 | 4.07380E+02 | -5.12550E+02 | 3.55540E+02 | -1.03630E+02 | -1.18650E+00 |
| 12 | 2.63230E+02 | -3.42330E+02 | 2.63980E+02 | -1.05410E+02 | 1.48240E+01 |
| 13 | -5.76590E+01 | 2.95200E+02 | -8.19060E+02 | 1.44210E+03 | -1.67780E+03 |
| 14 | 6.15130E+00 | -6.12290E+00 | 5.96250E+00 | -4.59180E+00 | 2.50960E+00 |
| 15 | -2.28090E+00 | 1.45170E+00 | -6.23560E-01 | 1.66370E-01 | -2.48220E-02 |
| 16 | -1.33660E+00 | 6.26050E-01 | -1.88160E-01 | 3.48350E-02 | -3.61140E-03 |
| Surface number | A22 | A24 | A26 | A28 | A30 |
| 13 | 1.28060E+03 | -6.11390E+02 | 1.63480E+02 | -1.83410E+01 | 0.00000E+00 |
| 14 | -9.27110E-01 | 2.19690E-01 | -3.01210E-02 | 1.81610E-03 | 0.00000E+00 |
| 15 | 1.58150E-03 | 0.00000E+00 | 0.00000E+00 | 0.00000E+00 | 0.00000E+00 |
| 16 | 1.60330E-04 | 0.00000E+00 | 0.00000E+00 | 0.00000E+00 | 0.00000E+00 |

Referring to (A) of FIG. 2, (A) of FIG. 2 is the spherical aberration diagram of the optical lens 100 in the first embodiment at wavelengths of 650 nm, 610 nm, 555 nm, 510 nm, 470 nm, and 435 nm. Wherein, the abscissa along the X-axis direction represents the deviation of the focus point in mm, and the ordinate along the Y-axis direction represents the normalized field of view. It can be seen from (A) of FIG. 2 that the spherical aberration value of the optical lens 100 in the first embodiment is well, indicating that the imaging quality of the optical lens 100 in this embodiment is well.

Referring to (B) of FIG. 2, (B) of FIG. 2 is an astigmatism curve diagram of the optical lens 100 in the first embodiment at a wavelength of 555 nm. Wherein, the abscissa along the X-axis direction represents the deviation of the focus point in mm, and ordinate along the Y-axis direction represents the image height in mm. T in the astigmatism curve diagram represents the curvature of the image plane 101 in the tangential direction, and S represents the curvature of the image plane 101 in the sagittal direction. It can be seen from (B) of FIG. 2 that at this wavelength, the field curvature of the optical lens 100 is small, the field curvature and astigmatism of each field of view have been well corrected, both the center and the edge of the field of view have clear imaging, indicating that the astigmatism of the optical lens 100 has been well compensated.

Referring to (C) of FIG. 2, (C) of FIG. 2 is a distortion diagram of the optical lens 100 in the first embodiment at a wavelength of 555nm. Wherein, the abscissa along the X-axis direction represents the distortion, and the ordinate along the Y-axis direction represents the image height in mm. It can be seen from (C) of FIG. 2 that at this wavelength, the image distortion caused by the main beam is small, and the distortion of the optical lens 100 has been well corrected.

Second embodiment

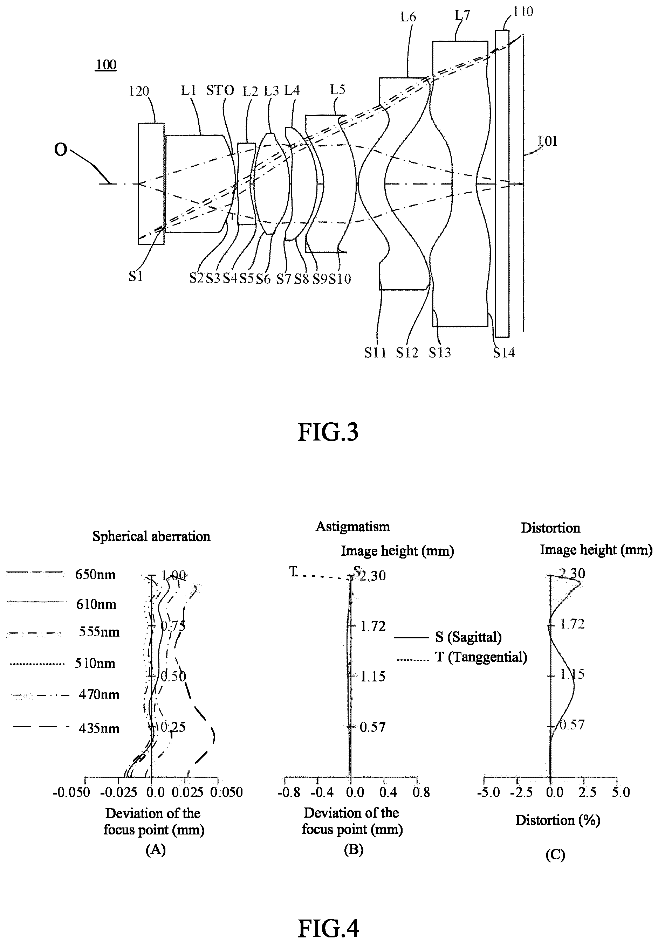

FIG. 3 is a schematic structural diagram of the optical lens 100 of the second embodiment, the optical lens 100 sequentially includes a flat glass 120, a first lens L1, an aperture STO, a second lens L2, a third lens L3, a fourth lens L4, a fifth lens L5, a sixth lens L6, a seventh lens L7, and a filter 110 along an optical axis O from an object side to an imaging side.

In the illustrated embodiment, the first lens L1 has positive refractive power, the second lens L2 has negative refractive power, third lens L3 has positive refractive power, the fourth lens L4 has positive refractive power, the fifth lens L5 has negative refractive power, the sixth lens L6 has positive refractive power, and the seventh lens L7 has negative refractive power.

Further, an object side surface S1 and an imaging side surface S2 of the first lens L1 are respectively concave and convex near the optical axis; an object side surface S3 of the second lens L2 is convex near the optical axis O, an imaging side surface S4 of the second lens L2 is concave near the optical axis O; an object side surface S5 and an imaging side surface S6 of the third lens L3 are both convex near the optical axis O; an object side surface S7 and an imaging side surface S8 of the fourth lens L4 are both convex near the optical axis O; an object side surface S9 and an imaging side surface S10 of the fifth lens L5 are respectively concave and convex near the optical axis; an object side surface S11 and an imaging side surface S12 of the sixth lens L6 are respectively convex and concave near the optical axis; an object side surface S13 and an imaging side surface S14 of the seventh lens L7 are respectively convex and concave near the optical axis.

The parameters of the optical lens 100 are given in Table 3 below. The definitions of each parameter can be obtained from the description of the previous embodiments, which will not be repeated here.

Table 3

| Second embodiment | | | | | | | | |
|---|---|---|---|---|---|---|---|---|
| f=0.505mm, NA=0.45, FOV=83.50deg, TTL=6mm | | | | | | | | |
| Surface number | Surface name | Surface type | Y radius | Thickness | Material | Refractive index | Abbe number | Focal length |
| OBJ | Object side | sphere | infinity | 0.0010 | | | | |
| 1 | Flat glass | sphere | infinity | 0.4000 | glass | 1.5183 | 64.17 | |
| 2 | | sphere | infinity | 0.0300 | | | | |
| 3 | First lens | asphere | -28.0604 | 1.0774 | plastic | 1.5461 | 55.93 | 1.4913 |
| 4 | | asphere | -0.8021 | -0.0471 | | | | |
| STO | Aperture | sphere | infinity | 0.0771 | | | | |
| 5 | Second lens | asphere | 1.7451 | 0.2000 | plastic | 1.6939 | 18.40 | -2.7138 |
| 6 | | asphere | 0.8632 | 0.0617 | | | | |
| 7 | Third lens | asphere | 2.3469 | 0.5547 | plastic | 1.5366 | 55.68 | 1.8099 |
| 8 | | asphere | -1.5198 | 0.0307 | | | | |
| 9 | Fourth lens | asphere | 4.4867 | 0.3987 | plastic | 1.5699 | 37.40 | 1.9938 |
| 10 | | asphere | -1.4725 | 0.1027 | | | | |
| 11 | Fifth lens | asphere | -0.8136 | 0.5096 | plastic | 1.6939 | 18.40 | -2.5067 |
| 12 | | asphere | -1.9207 | 0.0303 | | | | |
| 13 | Sixth lens | asphere | 0.5845 | 0.4131 | plastic | 1.5366 | 55.68 | 2.6114 |
| 14 | | asphere | 0.7552 | 1.0459 | | | | |
| 15 | Seventh lens | asphere | 5.2378 | 0.3756 | plastic | 1.5461 | 55.93 | -1.4331 |
| 16 | | asphere | 0.6636 | 0.3000 | | | | |
| 17 | Filter | sphere | infinity | 0.2100 | glass | 1.5183 | 64.20 | |
| 18 | | sphere | infinity | 0.2096 | | | | |
| IMG | Imaging surface | sphere | infinity | 0.0204 | | | | |

In the second embodiment, Table 4 shows the higher-order term coefficients that can be used for each aspherical lens in the second embodiment, wherein, each aspherical surface shape can be defined by the formula given in the first embodiment.

Table 4

| Second embodiment | | | | | |
|---|---|---|---|---|---|
| Surface number | K | A4 | A6 | A8 | A10 |
| 3 | 0.00000E+00 | -2.19677E+00 | 7.97160E+01 | -1.59610E+03 | 2.04157E+04 |
| 4 | 1.45824E+00 | 7.32708E-01 | 1.00678E+01 | -2.39600E+01 | -2.08374E+03 |
| 5 | 3.37773E-01 | -1.97189E+00 | 2.38736E+01 | -3.40613E+02 | 3.43473E+03 |
| 6 | -5.21039E+00 | -1.36546E+00 | 1.42747E+01 | -1.33761E+02 | 9.09907E+02 |
| 7 | 7.56598E+00 | 7.48855E-02 | 2.15210E+00 | -2.28621E+01 | 1.13140E+02 |
| 8 | 2.79756E+00 | 6.28982E-01 | -6.54309E+00 | 2.51934E+01 | -1.08003E+02 |
| 9 | -4.69416E+01 | 1.99248E-01 | -5.98450E-01 | -3.09526E+01 | 2.49221E+02 |
| 10 | -7.64004E-02 | -1.06421E+00 | 1.25933E+01 | -7.32013E+01 | 2.38468E+02 |
| 11 | -1.88405E+00 | -2.28139E-01 | 6.62832E+00 | -4.18570E+01 | 1.32116E+02 |
| 12 | -1.47950E+00 | -2.56766E-01 | 9.96561E-02 | 2.94182E+00 | -1.48908E+01 |
| 13 | -2.18428E+00 | 2.97638E-01 | -8.47537E-01 | 1.38495E+00 | -7.93577E-01 |
| 14 | -1.89899E+00 | 9.72075E-01 | -4.06485E+00 | 1.14104E+01 | -2.28750E+01 |
| 15 | -1.19464E+01 | -1.20172E+00 | 1.58587E+00 | -2.12775E+00 | 2.92226E+00 |
| 16 | -4.00669E+00 | -4.82918E-01 | 7.14297E-01 | -7.96287E-01 | 6.28013E-01 |
| Surface number | A12 | A14 | A16 | A18 | A20 |
| 3 | -1.75355E+05 | 1.03967E+06 | -4.30648E+06 | 1.24300E+07 | -2.44949E+07 |
| 4 | 3.73968E+04 | -3.06188E+05 | 1.37902E+06 | -3.30669E+06 | 3.32875E+06 |
| 5 | -2.53960E+04 | 1.32812E+05 | -4.58196E+05 | 9.18779E+05 | -8.02060E+05 |
| 6 | -4.51739E+03 | 1.55952E+04 | -3.48545E+04 | 4.46447E+04 | -2.46349E+04 |
| 7 | -3.62725E+02 | 8.28628E+02 | -1.31929E+03 | 1.28625E+03 | -5.64227E+02 |
| 8 | 5.58589E+02 | -1.99586E+03 | 4.17296E+03 | -4.60008E+03 | 2.06891E+03 |
| 9 | -1.13807E+03 | 3.30446E+03 | -5.83940E+03 | 5.69612E+03 | -2.35835E+03 |
| 10 | -5.22517E+02 | 8.75835E+02 | -1.10178E+03 | 8.67469E+02 | -3.01888E+02 |
| 11 | -2.37365E+02 | 2.73849E+02 | -2.46162E+02 | 1.78345E+02 | -6.66551E+01 |
| 12 | 4.03036E+01 | -6.72551E+01 | 6.83059E+01 | -3.86488E+01 | 9.37401E+00 |
| 13 | -3.11325E+00 | 9.13761E+00 | -1.36311E+01 | 1.38055E+01 | -9.83853E+00 |
| 14 | 3.12956E+01 | -2.94314E+01 | 1.92986E+01 | -8.84549E+00 | 2.78785E+00 |
| 15 | -2.51860E+00 | 1.23208E+00 | -3.23710E-01 | 3.52721E-02 | 1.35909E-03 |
| 16 | -3.45048E-01 | 1.31715E-01 | -3.43580E-02 | 5.86125E-03 | -5.90441E-04 |
| Surface number | A22 | A24 | A26 | A28 | A30 |
| 3 | 3.14117E+07 | -2.36203E+07 | 7.90051E+06 | 0.00000E+00 | 0.00000E+00 |
| 13 | 4.68338E+00 | -1.31504E+00 | 1.62496E-01 | 0.00000E+00 | 0.00000E+00 |
| 14 | -5.77262E-01 | 7.08254E-02 | -3.90447E-03 | 0.00000E+00 | 0.00000E+00 |
| 15 | -4.48525E-04 | 0.00000E+00 | 0.00000E+00 | 0.00000E+00 | 0.00000E+00 |
| 16 | 2.66137E-05 | 0.00000E+00 | 0.00000E+00 | 0.00000E+00 | 0.00000E+00 |

Referring to FIG. 4, it can be seen from (A) a spherical aberration diagram, (B) an astigmatism curve diagram, and (C) a distortion diagram in FIG. 4 that, the spherical aberration value, astigmatism, and distortion of the optical lens 100 are well controlled, so that the optical lens 100 of this embodiment has a good imaging quality. In addition, regarding the wavelengths corresponding to the curves in (A) in Figure 4, (B) in Figure 4, and (C) in Figure 4, please refer to the contents described in (A) in Figure 2, (B) in Figure 2, and (C) in Figure 2 in the first embodiment and will not be described again here.

Third embodiment

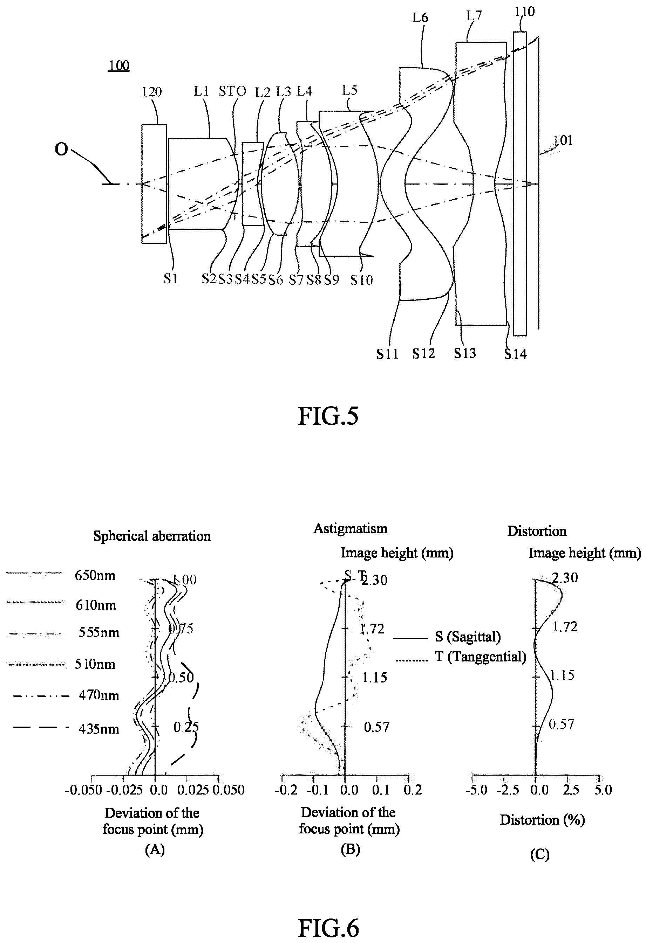

FIG. 5 is a schematic structural diagram of the optical lens 100 of the third embodiment, the optical lens 100 sequentially includes a flat glass 120, a first lens L1, an aperture STO, a second lens L2, a third lens L3, a fourth lens L4, a fifth lens L5, a sixth lens L6, a seventh lens L7, and a filter 110 along an optical axis O from an object side to an imaging side.
In the illustrated embodiment, the first lens L1 has positive refractive power, the second lens L2 has negative refractive power, third lens L3 has positive refractive power, the fourth lens L4 has positive refractive power, the fifth lens L5 has negative refractive power, the sixth lens L6 has positive refractive power, and the seventh lens L7 has negative refractive power.
Further, an object side surface S1 and an imaging side surface S2 of the first lens L1 are both convex near the optical axis O; an object side surface S3 of the second lens L2 is convex near the optical axis O, an imaging side surface S4 of the second lens L2 is concave near the optical axis O; an object side surface S5 and an imaging side surface S6 of the third lens L3 are both convex near the optical axis O; an object side surface S7 and an imaging side surface S8 of the fourth lens L4 are both convex near the optical axis O; an object side surface S9 and an imaging side surface S10 of the fifth lens L5 are respectively concave and convex near the optical axis; an object side surface S11 and an imaging side surface S12 of the sixth lens L6 are respectively convex and concave near the optical axis; an object side surface S13 and an imaging side surface S14 of the seventh lens L7 are respectively convex and concave near the optical axis.
The parameters of the optical lens 100 are given in Table 5 below. The definitions of each parameter can be obtained from the description of the previous embodiments, which will not be repeated here.

Table 5

| Third embodiment | | | | | | | | |
|---|---|---|---|---|---|---|---|---|
| f=0.511mm, NA=0.45, FOV=87.99deg, TTL=6.39mm | | | | | | | | |
| Surface number | Surface name | Surface type | Y radius | Thickness | Material | Refractive index | Abbe number | Focal length |
| OBJ | Object side | sphere | infinity | 0.0010 | | | | |
| 1 | Flat glass | sphere | infinity | 0.4000 | glass | 1.5183 | 64.17 | |
| 2 | | sphere | infinity | 0.0300 | | | | |
| 3 | First lens | asphere | 11.7337 | 1.1291 | plastic | 1.5461 | 55.93 | 1.5253 |
| 4 | | asphere | -0.8661 | -0.0607 | | | | |
| STO | Aperture | sphere | infinity | 0.1128 | | | | |
| 5 | Second lens | asphere | 1.7652 | 0.2500 | plastic | 1.6939 | 18.40 | -3.1323 |
| 6 | | asphere | 0.9176 | 0.0621 | | | | |
| 7 | Third lens | asphere | 2.2656 | 0.6060 | plastic | 1.5366 | 55.68 | 1.9172 |
| 8 | | asphere | -1.7082 | 0.0300 | | | | |
| 9 | Fourth lens | asphere | 2.8674 | 0.5036 | plastic | 1.5699 | 37.40 | 2.1005 |
| 10 | | asphere | -1.9240 | 0.0933 | | | | |
| 11 | Fifth lens | asphere | -0.9140 | 0.6542 | plastic | 1.6939 | 18.40 | -2.7384 |
| 12 | | asphere | -2.2773 | 0.0300 | | | | |
| 13 | Sixth lens | asphere | 0.5516 | 0.3995 | plastic | 1.5366 | 55.68 | 2.7003 |
| 14 | | asphere | 0.6654 | 1.0968 | | | | |
| 15 | Seventh lens | asphere | 17.6463 | 0.3514 | plastic | 1.5699 | 37.40 | -1.3703 |
| 16 | | asphere | 0.7424 | 0.3000 | | | | |
| 17 | Filter | sphere | infinity | 0.2100 | glass | 1.5180 | 64.20 | |
| 18 | | sphere | infinity | 0.1745 | | | | |

(continued)

| Third embodiment | | | | | | | | |
|---|---|---|---|---|---|---|---|---|
| f=0.511mm, NA=0.45, FOV=87.99deg, TTL=6.39mm | | | | | | | | |
| Surface number | Surface name | Surface type | Y radius | Thickness | Material | Refractive index | Abbe number | Focal length |
| IMG | Imaging surface | sphere | infinity | 0.0210 | | | | |

In the third embodiment, Table 6 shows the higher-order term coefficients that can be used for each aspherical lens in the third embodiment.

Table 6

| Third embodiment | | | | | |
|---|---|---|---|---|---|
| Surface number | K | A4 | A6 | A8 | A10 |
| 3 | 0.00000E+00 | -3.15265E+00 | 1.21225E+02 | -2.70868E+03 | 3.84833E+04 |
| 4 | 1.81900E+00 | -3.13362E-01 | 7.13867E+00 | 3.00353E+02 | -8.44633E+03 |
| 5 | 1.21864E+00 | -2.79883E+00 | 3.58553E+01 | -5.01580E+02 | 5.33537E+03 |
| 6 | -4.36137E+00 | -7.60720E-01 | -1.97013E+00 | 7.98232E+01 | -8.55923E+02 |
| 7 | 6.76105E+00 | 4.32493E-01 | -3.13815E+00 | 1.78065E+01 | -1.19097E+02 |
| 8 | 3.41501E+00 | -7.05487E-01 | 1.35062E+01 | -1.23934E+02 | 6.13506E+02 |
| 9 | -1.21198E+00 | -5.48699E-01 | 6.60091E+00 | -5.45025E+01 | 2.21650E+02 |
| 10 | -9.32950E-02 | -3.22128E-01 | 1.27112E+00 | 3.23315E+00 | -5.72719E+01 |
| 11 | -1.73682E+00 | 4.35919E-01 | -2.75460E+00 | 1.71149E+01 | -7.86619E+01 |
| 12 | 2.81328E-01 | -2.79348E-01 | -5.28291E-01 | 6.70959E+00 | -2.44837E+01 |
| 13 | -2.08466E+00 | 3.28313E-01 | -1.07808E+00 | 3.72653E+00 | -1.51271E+01 |
| 14 | -1.85651E+00 | 1.14288E+00 | -4.97289E+00 | 1.35304E+01 | -2.53685E+01 |
| 15 | 0.00000E+00 | -1.01809E+00 | 8.53482E-01 | -7.46514E-01 | 1.78590E+00 |
| 16 | -3.53498E+00 | -6.03617E-01 | 9.47653E-01 | -1.14323E+00 | 9.71638E-01 |
| Surface number | A12 | A14 | A16 | A18 | A20 |
| 3 | -3.64085E+05 | 2.35947E+06 | -1.06161E+07 | 3.31199E+07 | -7.02751E+07 |
| 4 | 1.05481E+05 | -7.43124E+05 | 3.04259E+06 | -6.75834E+06 | 6.32151E+06 |
| 5 | -4.08795E+04 | 2.14622E+05 | -7.23306E+05 | 1.39438E+06 | -1.16007E+06 |
| 6 | 5.09730E+03 | -1.83553E+04 | 3.96498E+04 | -4.74050E+04 | 2.41764E+04 |
| 7 | 5.90186E+02 | -1.77813E+03 | 3.12417E+03 | -2.96788E+03 | 1.18193E+03 |
| 8 | -1.82264E+03 | 3.28358E+03 | -3.35984E+03 | 1.64780E+03 | -2.16128E+02 |
| 9 | -5.13470E+02 | 6.13411E+02 | -1.56389E+02 | -3.80836E+02 | 2.80050E+02 |
| 10 | 2.32939E+02 | -4.78106E+02 | 5.50402E+02 | -3.42498E+02 | 9.05964E+01 |
| 11 | 2.26701E+02 | -3.88393E+02 | 3.83682E+02 | -2.01474E+02 | 4.35164E+01 |
| 12 | 5.07288E+01 | -6.50220E+01 | 5.10792E+01 | -2.25998E+01 | 4.33342E+00 |
| 13 | 4.71453E+01 | -1.01277E+02 | 1.46354E+02 | -1.41775E+02 | 9.06021E+01 |
| 14 | 3.22358E+01 | -2.80844E+01 | 1.69897E+01 | -7.14262E+00 | 2.05102E+00 |
| 15 | -2.28794E+00 | 1.53369E+00 | -5.89903E-01 | 1.31696E-01 | -1.58630E-02 |
| 16 | -5.58103E-01 | 2.14879E-01 | -5.45011E-02 | 8.71145E-03 | -7.93486E-04 |

(continued)

| Surface number | A22 | A24 | A26 | A28 | A30 |
|---|---|---|---|---|---|
| 3 | 9.67493E+07 | -7.79308E+07 | 2.78769E+07 | 0.00000E+00 | 0.00000E+00 |
| 13 | -3.65383E+01 | 8.40467E+00 | -8.38964E-01 | 0.00000E+00 | 0.00000E+00 |
| 14 | -3.84368E-01 | 4.24354E-02 | -2.09614E-03 | 0.00000E+00 | 0.00000E+00 |
| 15 | 7.95177E-04 | 0.00000E+00 | 0.00000E+00 | 0.00000E+00 | 0.00000E+00 |
| 16 | 3.13494E-05 | 0.00000E+00 | 0.00000E+00 | 0.00000E+00 | 0.00000E+00 |

Referring to FIG. 6, it can be seen from (A) a spherical aberration diagram, (B) an astigmatism curve diagram, and (C) a distortion diagram in FIG. 6 that, the spherical aberration value, astigmatism, and distortion of the optical lens 100 are well controlled, so that the optical lens 100 of this embodiment has a good imaging quality. In addition, regarding the wavelengths corresponding to the curves in (A) in Figure 6, (B) in Figure 6, and (C) in Figure 6, please refer to the contents described in (A) in Figure 2, (B) in Figure 2, and (C) in Figure 2 in the first embodiment and will not be described again here.

Fourth embodiment

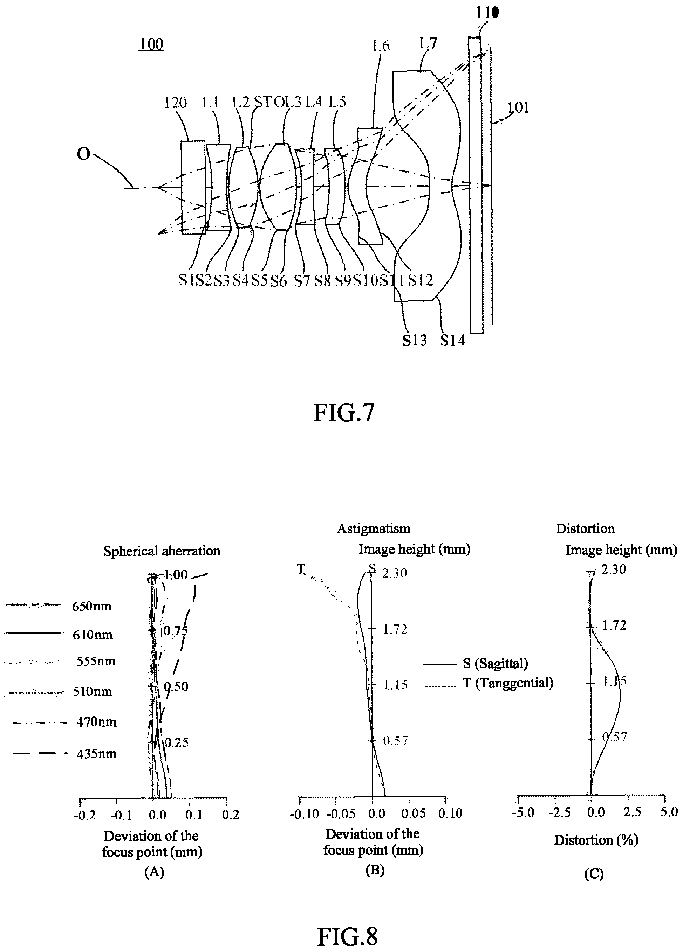

FIG. 7 is a schematic structural diagram of the optical lens 100 of the fourth embodiment, the optical lens 100 sequentially includes a flat glass 120, a first lens L1, a second lens L2, an aperture STO, a third lens L3, a fourth lens L4, a fifth lens L5, a sixth lens L6, a seventh lens L7, and a filter 110 along an optical axis O from an object side to an imaging side.

In the illustrated embodiment, the first lens L1 has negative refractive power, the second lens L2 has positive refractive power, third lens L3 has positive refractive power, the fourth lens L4 has negative refractive power, the fifth lens L5 has negative refractive power, the sixth lens L6 has positive refractive power, and the seventh lens L7 has negative refractive power.

Further, an object side surface S1 and an imaging side surface S2 of the first lens L1 are both concave near the optical axis O; an object side surface S3 of the second lens L2 is convex near the optical axis O, an imaging side surface S4 of the second lens L2 is convex near the optical axis O; an object side surface S5 and an imaging side surface S6 of the third lens L3 are both convex near the optical axis O; an object side surface S7 and an imaging side surface S8 of the fourth lens L4 are both concave near the optical axis O; an object side surface S9 and an imaging side surface S10 of the fifth lens L5 are respectively concave and convex near the optical axis; an object side surface S11 and an imaging side surface S12 of the sixth lens L6 are respectively convex and concave near the optical axis; an object side surface S13 and an imaging side surface S14 of the seventh lens L7 are both concave near the optical axis.

The parameters of the optical lens 100 are given in Table 7 below.

Table 7

| Fourth embodiment | | | | | | | | |
|---|---|---|---|---|---|---|---|---|
| f=0.434mm, NA=0.45, FOV=50.18deg, TTL=5.25mm | | | | | | | | |
| Surface number | Surface name | Surface type | Y radius | Thickness | Material | Refractive index | Abbe number | Focal length |
| OBJ | Object side | sphere | infinity | 0.4000 | | | | |
| 1 | Flat glass | sphere | infinity | 0.4000 | glass | 1.5183 | 64.17 | |
| 2 | | sphere | infinity | 0.1151 | | | | |
| 3 | First lens | asphere | -2.1922 | 0.2500 | plastic | 1.6939 | 18.40 | -3.0702 |
| 4 | | asphere | 79.2289 | 0.0312 | | | | |
| 5 | Second lens | asphere | 2.0038 | 0.4959 | plastic | 1.5461 | 55.93 | 1.5641 |
| 6 | | asphere | -1.3586 | -0.1244 | | | | |
| STO | Aperture | sphere | infinity | 0.1544 | | | | |
| 7 | Third lens | asphere | 0.9737 | 0.6219 | plastic | 1.5461 | 55.93 | 1.3372 |
| 8 | | asphere | -2.2616 | 0.0853 | | | | |

(continued)

| Fourth embodiment | | | | | | | | |
|---|---|---|---|---|---|---|---|---|
| f=0.434mm, NA=0.45, FOV=50.18deg, TTL=5.25mm | | | | | | | | |
| Surface number | Surface name | Surface type | Y radius | Thickness | Material | Refractive index | Abbe number | Focal length |
| 9 | Fourth lens | asphere | -3.0510 | 0.2000 | plastic | 1.6939 | 18.40 | -3.3682 |
| 10 | | asphere | 10.2589 | 0.2676 | | | | |
| 11 | Fifth lens | asphere | -1.8808 | 0.2695 | plastic | 1.6939 | 18.40 | -4.1889 |
| 12 | | asphere | -5.6413 | 0.0549 | | | | |
| 13 | Sixth lens | asphere | 0.5652 | 0.3000 | plastic | 1.5917 | 28.39 | 2.0851 |
| 14 | | asphere | 0.8373 | 1.0736 | | | | |
| 15 | Seventh lens | asphere | -11.8886 | 0.3849 | plastic | 1.5461 | 55.93 | -1.2216 |
| 16 | | asphere | 0.7148 | 0.3000 | | | | |
| 17 | Filter | sphere | infinity | 0.2100 | glass | 1.5183 | 64.17 | |
| 18 | | sphere | infinity | 0.1793 | | | | |
| IMG | Imaging surface | sphere | infinity | -0.0176 | | | | |

In the fourth embodiment, Table 8 shows the higher-order term coefficients that can be used for each aspherical lens in the fourth embodiment.

Table 8

| Fourth embodiment | | | | | |
|---|---|---|---|---|---|
| Surface number | K | A4 | A6 | A8 | A10 |
| 3 | -2.20090E-01 | 3.13009E-01 | -2.36582E+00 | 1.62211E+01 | -9.01864E+01 |
| 4 | 0.00000E+00 | 1.52317E+00 | -1.36731E+01 | 9.12089E+01 | -4.18040E+02 |
| 5 | 1.53886E+00 | 1.39943E+00 | -1.51692E+01 | 1.01266E+02 | -4.34999E+02 |
| 6 | -4.00956E+00 | -3.06142E-01 | 1.03758E+00 | -2.49468E+00 | 3.71468E+00 |
| 7 | -5.54802E-01 | -1.26612E-01 | 7.29519E-01 | 1.19162E-01 | -1.49115E+01 |
| 8 | 2.33578E+00 | 4.64660E-02 | -6.73552E+00 | 5.74515E+01 | -2.43321E+02 |
| 9 | 2.71608E+00 | 2.81511E-01 | -1.49009E+01 | 1.12234E+02 | -4.15228E+02 |
| 10 | 0.00000E+00 | 8.82335E-01 | -1.25381E+01 | 7.73284E+01 | -2.86452E+02 |
| 11 | 2.01721E+00 | 2.09069E+00 | -1.92853E+01 | 1.42552E+02 | -9.96457E+02 |
| 12 | 3.51709E+01 | -5.69034E-01 | 1.40398E-01 | -1.10898E+00 | 1.58221E+00 |
| 13 | -4.07690E+00 | 1.52278E-01 | -8.05072E-01 | -6.14614E+00 | 3.86277E+01 |
| 14 | -1.15236E+00 | 8.86358E-02 | -1.29611E+00 | -2.97816E+00 | 2.47131E+01 |
| 15 | 0.00000E+00 | -1.65398E+00 | 3.43056E+00 | -8.63531E+00 | 2.68635E+01 |
| 16 | -5.73284E+00 | -5.47005E-01 | 8.46596E-01 | -5.68680E-01 | -9.69393E-01 |
| Surface number | A12 | A14 | A16 | A18 | A20 |
| 3 | 3.73876E+02 | -1.07644E+03 | 2.00947E+03 | -2.14671E+03 | 9.87208E+02 |
| 4 | 1.35294E+03 | -3.17643E+03 | 5.27600E+03 | -5.51484E+03 | 2.68640E+03 |
| 5 | 1.21152E+03 | -2.12410E+03 | 2.12919E+03 | -9.33982E+02 | 0.00000E+00 |
| 6 | 1.27163E+01 | -7.22894E+01 | 1.21046E+02 | -7.46880E+01 | 0.00000E+00 |

(continued)

| Surface number | A12 | A14 | A16 | A18 | A20 |
|---|---|---|---|---|---|
| 7 | 8.83072E+01 | -2.69181E+02 | 4.57771E+02 | -4.03931E+02 | 1.35001E+02 |
| 8 | 6.35952E+02 | -1.07049E+03 | 1.15112E+03 | -7.63712E+02 | 2.56900E+02 |
| 9 | 8.22211E+02 | -6.70037E+02 | -2.69774E+02 | 6.27679E+02 | -4.55114E+01 |
| 10 | 9.03978E+02 | -3.26241E+03 | 1.04300E+04 | -1.95348E+04 | 1.51166E+04 |
| 11 | 5.42350E+03 | -2.07390E+04 | 5.13118E+04 | -7.31378E+04 | 4.54191E+04 |
| 12 | 5.91050E+00 | -9.37883E+00 | -6.68096E+01 | 2.03931E+02 | -1.66094E+02 |
| 13 | -1.36118E+02 | 3.42573E+02 | -5.75126E+02 | 5.54424E+02 | -2.30523E+02 |
| 14 | -6.27614E+01 | 8.70909E+01 | -7.07149E+01 | 3.15944E+01 | -6.01087E+00 |
| 15 | -7.35074E+01 | 1.48057E+02 | -2.10088E+02 | 2.10708E+02 | -1.50367E+02 |
| 16 | 3.29740E+00 | -4.76816E+00 | 4.34313E+00 | -2.71324E+00 | 1.19442E+00 |
| Surface number | A22 | A24 | A26 | A28 | A30 |
| 15 | 7.60239E+01 | -2.66442E+01 | 6.16037E+00 | -8.45381E-01 | 5.21579E-02 |
| 16 | -3.70950E-01 | 7.96424E-02 | -1.12546E-02 | 9.41924E-04 | -3.53673E-05 |

Referring to FIG. 8, it can be seen from (A) a spherical aberration diagram, (B) an astigmatism curve diagram, and (C) a distortion diagram in FIG. 8 that, the spherical aberration value, astigmatism, and distortion of the optical lens 100 are well controlled, so that the optical lens 100 of this embodiment has a good imaging quality. In addition, regarding the wavelengths corresponding to the curves in (A) in Figure 8, (B) in Figure 8, and (C) in Figure 8, please refer to the contents described in (A) in Figure 2, (B) in Figure 2, and (C) in Figure 2 in the first embodiment and will not be described again here.

Fifth embodiment

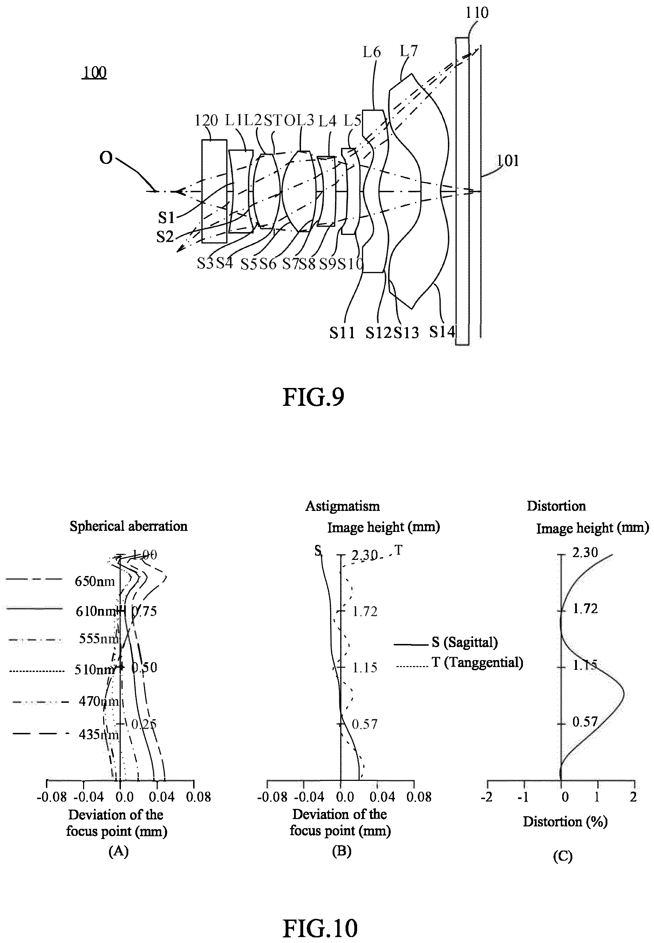

FIG. 9 is a schematic structural diagram of the optical lens 100 of the fifth embodiment, the optical lens 100 sequentially includes a flat glass 120, a first lens L1, a second lens L2, an aperture STO, a third lens L3, a fourth lens L4, a fifth lens L5, a sixth lens L6, a seventh lens L7, and a filter 110 along an optical axis O from an object side to an imaging side.

In the illustrated embodiment, the first lens L1 has negative refractive power, the second lens L2 has positive refractive power, third lens L3 has positive refractive power, the fourth lens L4 has negative refractive power, the fifth lens L5 has negative refractive power, the sixth lens L6 has positive refractive power, and the seventh lens L7 has negative refractive power.

Further, an object side surface S1 and an imaging side surface S2 of the first lens L1 are respectively concave and convex near the optical axis O; an object side surface S3 of the second lens L2 is convex near the optical axis O, an imaging side surface S4 of the second lens L2 is convex near the optical axis O; an object side surface S5 and an imaging side surface S6 of the third lens L3 are both convex near the optical axis O; an object side surface S7 and an imaging side surface S8 of the fourth lens L4 are respectively concave and convex near the optical axis O; an object side surface S9 and an imaging side surface S10 of the fifth lens L5 are both concave near the optical axis; an object side surface S11 and an imaging side surface S12 of the sixth lens L6 are respectively convex and concave near the optical axis; an object side surface S13 and an imaging side surface S14 of the seventh lens L7 are respectively convex and concave near the optical axis.

The parameters of the optical lens 100 are given in Table 9 below. The definitions of each parameter can be obtained from the description of the previous embodiments, which will not be repeated here.

Table 9

| Fifth embodiment | | | | | | | | |
|---|---|---|---|---|---|---|---|---|
| f=0.469mm, NA=0.40, FOV=81.79deg, TTL=4.5mm | | | | | | | | |
| Surface number | Surface name | Surface type | Y radius | Thickness | Material | Refractive index | Abbe number | Focal length |
| OBJ | Object side | sphere | infinity | 0.4000 | | | | |

(continued)

| Fifth embodiment | | | | | | | | |
|---|---|---|---|---|---|---|---|---|
| f=0.469mm, NA=0.40, FOV=81.79deg, TTL=4.5mm | | | | | | | | |
| Surface number | Surface name | Surface type | Y radius | Thickness | Material | Refractive index | Abbe number | Focal length |
| 1 | Flat glass | sphere | infinity | 0.4000 | glass | 1.5183 | 64.17 | |
| 2 | | sphere | infinity | 0.1030 | | | | |
| 3 | First lens | asphere | -2.1660 | 0.2500 | plastic | 1.6800 | 18.40 | -3.4458 |
| 4 | | asphere | -26.8485 | 0.0743 | | | | |
| 5 | Second lens | asphere | 2.2144 | 0.4344 | plastic | 1.5400 | 55.80 | 1.6368 |
| 6 | | asphere | -1.3769 | -0.0968 | | | | |
| STO | Aperture | sphere | infinity | 0.1268 | | | | |
| 7 | Third lens | asphere | 0.8660 | 0.5497 | plastic | 1.5400 | 55.80 | 1.2684 |
| 8 | | asphere | -2.5852 | 0.1184 | | | | |
| 9 | Fourth lens | asphere | -2.4786 | 0.2000 | plastic | 1.6800 | 18.40 | -6.1431 |
| 10 | | asphere | -6.2080 | 0.1879 | | | | |
| 11 | Fifth lens | asphere | -1.9970 | 0.2001 | plastic | 1.6800 | 18.40 | -1.8777 |
| 12 | | asphere | 3.7858 | 0.0582 | | | | |
| 13 | Sixth lens | asphere | 0.4769 | 0.2500 | plastic | 1.6026 | 27.90 | 1.3966 |
| 14 | | asphere | 0.8753 | 0.6770 | | | | |
| 15 | Seventh lens | asphere | 6.2687 | 0.3168 | plastic | 1.5399 | 55.81 | -1.1833 |
| 16 | | asphere | 0.5712 | 0.2500 | | | | |
| 17 | Filter | sphere | infinity | 0.2100 | glass | 1.5183 | 64.17 | |
| 18 | | sphere | infinity | 0.2102 | | | | |
| IMG | Imaging surface | sphere | infinity | -0.0197 | | | | |

In the fifth embodiment, Table 10 shows the higher-order term coefficients that can be used for each aspherical lens in the fifth embodiment, wherein, each aspherical surface shape can be defined by the formula given in the first embodiment.

Table 10

| Fifth embodiment | | | | | |
|---|---|---|---|---|---|
| Surface number | K | A4 | A6 | A8 | A10 |
| 3 | 1.31766E-02 | 4.28662E-01 | -1.16119E+00 | 2.38264E+00 | -9.34738E+00 |
| 4 | 0.00000E+00 | 1.30705E+00 | 1.90644E+00 | -1.11942E+02 | 1.51254E+03 |
| 5 | 7.16089E+00 | 8.24301E-01 | 4.14050E-02 | -8.27068E+01 | 1.15388E+03 |
| 6 | -3.45689E+00 | -5.81203E-01 | 7.63348E+00 | -8.43999E+01 | 6.29667E+02 |
| 7 | -5.72418E-01 | -3.65295E-01 | 6.83727E+00 | -7.50758E+01 | 5.82233E+02 |
| 8 | 5.43550E+00 | -2.67797E-01 | -3.68878E+00 | 5.33777E+01 | -3.84126E+02 |
| 9 | 6.48828E+00 | -1.85739E-01 | -1.51970E+01 | 1.96207E+02 | -1.71752E+03 |
| 10 | -5.25932E+01 | 1.07923E+00 | -1.74253E+01 | 1.45847E+02 | -9.61949E+02 |
| 11 | -1.73682E+00 | 4.35919E-01 | -2.75460E+00 | 1.71149E+01 | -7.86619E+01 |
| 12 | 2.81328E-01 | -2.79348E-01 | -5.28291E-01 | 6.70959E+00 | -2.44837E+01 |

(continued)

| Fifth embodiment | | | | |
|---|---|---|---|---|
| Surface number | K | A4 | A6 | A8 | A10 |
| 13 | -2.08466E+00 | 3.28313E-01 | -1.07808E+00 | 3.72653E+00 | -1.51271E+01 |
| 14 | -1.85651E+00 | 1.14288E+00 | -4.97289E+00 | 1.35304E+01 | -2.53685E+01 |
| 15 | 0.00000E+00 | -1.01809E+00 | 8.53482E-01 | -7.46514E-01 | 1.78590E+00 |
| 16 | -3.53498E+00 | -6.03617E-01 | 9.47653E-01 | -1.14323E+00 | 9.71638E-01 |
| Surface number | A12 | A14 | A16 | A18 | A20 |
| 3 | 5.93470E+01 | -3.80149E+02 | 1.83565E+03 | -5.33408E+03 | 8.13417E+03 |
| 4 | -1.25016E+04 | 6.78908E+04 | -2.41453E+05 | 5.40450E+05 | -6.90213E+05 |
| 5 | -8.73066E+03 | 3.99448E+04 | -1.09385E+05 | 1.64734E+05 | -1.04922E+05 |
| 6 | -3.02759E+03 | 9.17823E+03 | -1.66593E+04 | 1.61625E+04 | -6.23530E+03 |
| 7 | -3.03907E+03 | 1.04419E+04 | -2.25896E+04 | 2.78947E+04 | -1.50424E+04 |
| 8 | 1.97998E+03 | -7.21049E+03 | 1.72678E+04 | -2.40739E+04 | 1.45333E+04 |
| 9 | 1.14724E+04 | -5.28499E+04 | 1.53589E+05 | -2.51198E+05 | 1.75577E+05 |
| 10 | 5.18420E+03 | -2.06995E+04 | 5.55751E+04 | -8.81200E+04 | 6.25861E+04 |
| 11 | 8.84137E+03 | -2.43523E+04 | 3.57252E+04 | -1.80592E+04 | -5.57438E+03 |
| 12 | -2.34656E+03 | 7.51748E+03 | -1.54732E+04 | 1.81385E+04 | -9.07709E+03 |
| 13 | -1.49291E+03 | 4.83218E+03 | -1.05928E+04 | 1.55514E+04 | -1.46030E+04 |
| 14 | 6.35774E+01 | -7.06610E+01 | 5.25412E+01 | -2.54709E+01 | 7.64083E+00 |
| 15 | -6.75392E+01 | 5.83531E+01 | -3.32718E+01 | 1.24959E+01 | -2.98284E+00 |
| 16 | -3.20692E+00 | 1.84635E+00 | -7.37381E-01 | 1.99283E-01 | -3.46112E-02 |
| Surface number | A22 | A24 | A26 | A28 | A30 |
| 3 | -4.99313E+03 | 0.00000E+00 | 0.00000E+00 | 0.00000E+00 | 0.00000E+00 |
| 4 | 3.83483E+05 | 0.00000E+00 | 0.00000E+00 | 0.00000E+00 | 0.00000E+00 |
| 13 | 7.90748E+03 | -1.87436E+03 | 0.00000E+00 | 0.00000E+00 | 0.00000E+00 |
| 14 | -1.26295E+00 | 8.45669E-02 | 0.00000E+00 | 0.00000E+00 | 0.00000E+00 |
| 15 | 4.11039E-01 | -2.49338E-02 | 0.00000E+00 | 0.00000E+00 | 0.00000E+00 |
| 16 | 3.47633E-03 | -1.53380E-04 | 0.00000E+00 | 0.00000E+00 | 0.00000E+00 |

Referring to FIG. 10, it can be seen from (A) a spherical aberration diagram, (B) an astigmatism curve diagram, and (C) a distortion diagram in FIG. 10 that, the spherical aberration value, astigmatism, and distortion of the optical lens 100 are well controlled, so that the optical lens 100 of this embodiment has a good imaging quality. In addition, regarding the wavelengths corresponding to the curves in (A) in Figure 10, (B) in Figure 10, and (C) in Figure 10, please refer to the contents described in (A) in Figure 2, (B) in Figure 2, and (C) in Figure 2 in the first embodiment and will not be described again here.

Sixth embodiment

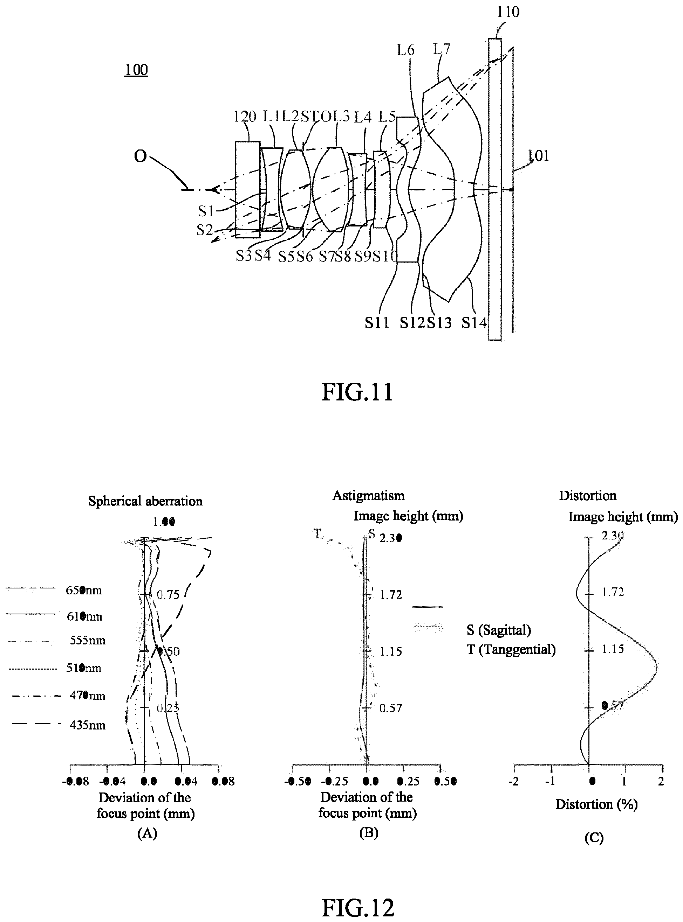

FIG. 11 is a schematic structural diagram of the optical lens 100 of the sixth embodiment, the optical lens 100 sequentially includes a flat glass 120, a first lens L1, a second lens L2, an aperture STO, a third lens L3, a fourth lens L4, a fifth lens L5, a sixth lens L6, a seventh lens L7, and a filter 110 along an optical axis O from an object side to an imaging side.
In the illustrated embodiment, the first lens L1 has negative refractive power, the second lens L2 has positive refractive power, third lens L3 has positive refractive power, the fourth lens L4 has negative refractive power, the fifth lens L5 has negative refractive power, the sixth lens L6 has positive refractive power, and the seventh lens L7 has negative refractive power.

Further, an object side surface S1 and an imaging side surface S2 of the first lens L1 are respectively convex and concave near the optical axis O; an object side surface S3 of the second lens L2 is convex near the optical axis O, an imaging side surface S4 of the second lens L2 is convex near the optical axis O; an object side surface S5 and an imaging side surface S6 of the third lens L3 are both convex near the optical axis O; an object side surface S7 and an imaging side surface S8 of the fourth lens L4 are both concave near the optical axis O; an object side surface S9 and an imaging side surface S10 of the fifth lens L5 are both concave near the optical axis; an object side surface S11 and an imaging side surface S12 of the sixth lens L6 are respectively convex and concave near the optical axis; an object side surface S13 and an imaging side surface S14 of the seventh lens L7 are respectively convex and concave near the optical axis.

The parameters of the optical lens 100 are given in Table 11 below.

Table 11

| Sixth embodiment | | | | | | | | |
|---|---|---|---|---|---|---|---|---|
| f=0.433mm, NA=0.45, FOV=60.47deg, TTL=4.60mm | | | | | | | | |
| Surface number | Surface name | Surface type | Y radius | Thickness | Material | Refractive index | Abbe number | Focal length |
| OBJ | Object side | sphere | infinity | 0.4000 | | | | |
| 1 | Flat glass | sphere | infinity | 0.4000 | glass | 1.5183 | 64.17 | |
| 2 | | sphere | infinity | 0.1110 | | | | |
| 3 | First lens | asphere | -2.4408 | 0.2000 | plastic | 1.6939 | 18.40 | -4.0516 |
| 4 | | asphere | -19.1360 | 0.0300 | | | | |
| 5 | Second lens | asphere | 2.0516 | 0.5062 | plastic | 1.5461 | 55.93 | 1.5226 |
| 6 | | asphere | -1.2762 | -0.1255 | | | | |
| STO | Aperture | sphere | infinity | 0.1555 | | | | |
| 7 | Third lens | asphere | 0.8741 | 0.5943 | plastic | 1.5366 | 55.68 | 1.3694 |
| 8 | | asphere | -3.5157 | 0.0778 | | | | |
| 9 | Fourth lens | asphere | -6.4086 | 0.2000 | plastic | 1.6939 | 18.40 | -4.7907 |
| 10 | | asphere | 6.9960 | 0.1646 | | | | |
| 11 | Fifth lens | asphere | -6.5676 | 0.2484 | plastic | 1.6939 | 18.40 | -3.6638 |
| 12 | | asphere | 4.2125 | 0.1068 | | | | |
| 13 | Sixth lens | asphere | 0.4600 | 0.2000 | plastic | 1.5688 | 37.71 | 1.9671 |
| 14 | | asphere | 0.6579 | 0.7559 | | | | |
| 15 | Seventh lens | asphere | 10.0117 | 0.3250 | plastic | 1.5461 | 55.93 | -1.1457 |
| 16 | | asphere | 0.5821 | 0.2500 | | | | |
| 17 | Filter | sphere | infinity | 0.2100 | glass | 1.5183 | 64.17 | |
| 18 | | sphere | infinity | 0.2100 | | | | |
| IMG | Imaging surface | sphere | infinity | -0.0180 | | | | |

In the sixth embodiment, Table 12 shows the higher-order term coefficients that can be used for each aspherical lens in the sixth embodiment.

Table 12

| Sixth embodiment | | | | | |
|---|---|---|---|---|---|
| Surface number | K | A4 | A6 | A8 | A10 |
| 3 | -2.43309E+00 | 5.67120E-02 | 3.96089E+00 | -6.37210E+01 | 4.93220E+02 |
| 4 | 0.00000E+00 | 2.26429E+00 | -1.96095E+01 | 1.23066E+02 | -4.78011E+02 |

(continued)

| Sixth embodiment | | | | |
|---|---|---|---|---|
| Surface number | K | A4 | A6 | A8 | A10 |
| 5 | 7.11128E+00 | 2.15740E+00 | -2.40324E+01 | 1.66543E+02 | -7.65703E+02 |
| 6 | -3.27333E+00 | -2.82893E-01 | 5.48915E-01 | 1.14422E+01 | -1.71097E+02 |
| 7 | -6.29922E-01 | -2.06689E-01 | 2.43216E+00 | -1.19994E+01 | 1.18388E+01 |
| 8 | 3.50077E+00 | -1.23753E-01 | -8.71103E+00 | 6.29019E+01 | -1.06883E+02 |
| 9 | -4.51501E+00 | 7.53116E-02 | -1.21361E+01 | 9.09785E+00 | 8.54238E+02 |
| 10 | -1.74289E+01 | 1.10581E+00 | -4.82560E+00 | -1.66644E+02 | 2.80617E+03 |
| 11 | 1.16609E+01 | 1.09566E+00 | -1.05120E+01 | 1.12523E+02 | -1.35747E+03 |
| 12 | 4.83514E+00 | -3.48767E+00 | 3.98543E+01 | -3.75570E+02 | 2.51124E+03 |
| 13 | -3.68439E+00 | -5.54053E-01 | 9.02046E+00 | -8.87090E+01 | 4.68811E+02 |
| 14 | -3.80635E+00 | 5.98419E-01 | -2.14301E+00 | -5.57918E+00 | 3.63994E+01 |
| 15 | 0.00000E+00 | -2.85949E+00 | 7.68647E+00 | -1.87629E+01 | 3.61423E+01 |
| 16 | -5.91524E+00 | -8.18707E-01 | 1.70893E+00 | -2.58156E+00 | 2.59662E+00 |
| Surface number | A12 | A14 | A16 | A18 | A20 |
| 3 | -2.28337E+03 | 6.58100E+03 | -1.15884E+04 | 1.14457E+04 | -4.85941E+03 |
| 4 | 9.46416E+02 | 7.97625E+01 | -4.70506E+03 | 9.19697E+03 | -5.87371E+03 |
| 5 | 2.27814E+03 | -4.13989E+03 | 3.93128E+03 | -9.75929E+02 | -7.55934E+02 |
| 6 | 1.15816E+03 | -4.40146E+03 | 9.67397E+03 | -1.15125E+04 | 5.73952E+03 |
| 7 | 2.16054E+02 | -1.25435E+03 | 3.11743E+03 | -3.77315E+03 | 1.77648E+03 |
| 8 | -6.35717E+02 | 4.04959E+03 | -9.99309E+03 | 1.19833E+04 | -5.74498E+03 |
| 9 | -7.13303E+03 | 2.81745E+04 | -6.17366E+04 | 7.23342E+04 | -3.54010E+04 |
| 10 | -2.19755E+04 | 1.02311E+05 | -2.88756E+05 | 4.56294E+05 | -3.07634E+05 |
| 11 | 1.02495E+04 | -4.67154E+04 | 1.25018E+05 | -1.80397E+05 | 1.09824E+05 |
| 12 | -1.17467E+04 | 3.69506E+04 | -7.37795E+04 | 8.39948E+04 | -4.11583E+04 |
| 13 | -1.66731E+03 | 3.98394E+03 | -6.16078E+03 | 5.74923E+03 | -2.82352E+03 |
| 14 | -8.36493E+01 | 1.10748E+02 | -9.11871E+01 | 4.60714E+01 | -1.30940E+01 |
| 15 | -4.63474E+01 | 3.90664E+01 | -2.19187E+01 | 8.14769E+00 | -1.93388E+00 |
| 16 | -1.67811E+00 | 6.24810E-01 | -7.39882E-02 | -4.01603E-02 | 2.00760E-02 |
| Surface number | A22 | A24 | A26 | A28 | A30 |
| 13 | 5.19886E+02 | 0.00000E+00 | 0.00000E+00 | 0.00000E+00 | 0.00000E+00 |
| 14 | 1.60556E+00 | 0.00000E+00 | 0.00000E+00 | 0.00000E+00 | 0.00000E+00 |
| 15 | 2.65991E-01 | -1.61543E-02 | 0.00000E+00 | 0.00000E+00 | 0.00000E+00 |
| 16 | -3.65407E-03 | 2.50162E-04 | 0.00000E+00 | 0.00000E+00 | 0.00000E+00 |

Referring to FIG. 12, it can be seen from (A) a spherical aberration diagram, (B) an astigmatism curve diagram, and (C) a distortion diagram in FIG. 12 that, the spherical aberration value, astigmatism, and distortion of the optical lens 100 are well controlled, so that the optical lens 100 of this embodiment has a good imaging quality. In addition, regarding the wavelengths corresponding to the curves in (A) in Figure 12, (B) in Figure 12, and (C) in Figure 12, please refer to the contents described in (A) in Figure 2, (B) in Figure 2, and (C) in Figure 2 in the first embodiment and will not be described again here.

Referring to Table 13, Table 13 is a summary of the ratios of each relational expression in the first to sixth embodiments of the present disclosure.

Table 13

| Relational expression | First embodiment | Second embodiment | Third embodiment | Fourth embodiment | Fifth embodiment | Sixth embodiment |
|---|---|---|---|---|---|---|
| FOV(unit: deg) | 87.330 | 83.500 | 87.990 | 50.180 | 81.790 | 60.470 |
| NA | 0.450 | 0.450 | 0.450 | 0.450 | 0.400 | 0.450 |
| TTL/f | 13.661 | 11.881 | 12.505 | 12.097 | 9.595 | 10.624 |
| TTL/TmgH | 2.172 | 2.607 | 2.776 | 2.281 | 1.955 | 1.999 |
| u(unit: mm) | 0.800 | 0.400 | 0.400 | 0.800 | 0.800 | 0.800 |
| ImgH/ObjH | 2.708 | 2.711 | 2.712 | 3.001 | 2.418 | 2.701 |
| FOV/ImgH(unit: deg/mm) | 37.944 | 36.280 | 38.231 | 21.803 | 35.537 | 26.274 |
| FOV/f(unit: deg/mm) | 238.607 | 165.347 | 172.192 | 115.622 | 174.392 | 139.654 |
| CT1/CT2 | 1.988 | 5.387 | 4.516 | 0.504 | 0.576 | 0.395 |
| CT3/CT4 | 1.495 | 1.391 | 1.203 | 3.109 | 2.748 | 2.972 |
| CT3/CT5 | 1.930 | 1.089 | 0.926 | 2.307 | 2.747 | 2.393 |
| CT3/CT2 | 2.316 | 2.773 | 2.424 | 1.254 | 1.265 | 1.174 |
| CT3/CT1 | 1.165 | 0.515 | 0.537 | 2.487 | 2.199 | 2.972 |
| AT67/(CT6+CT7) | 1.329 | 1.326 | 1.461 | 1.567 | 1.194 | 1.440 |
| TD/(CT1+CT2+CT3+CT4+CT5) | 2.076 | 1.763 | 1.673 | 2.212 | 2.048 | 1.966 |
| ET7/CT7 | 1.803 | 2.277 | 2.325 | 1.655 | 1.120 | 1.271 |
| SAG13/CT7 | -1.115 | -0.793 | -0.794 | -1.561 | -1.594 | -1.551 |
| (\|f1\|+\|f2\|)/\|f7\| | 3.708 | 2.934 | 3.399 | 3.794 | 4.295 | 4.866 |
| f3/n3 | 1.320 | 1.175 | 1.247 | 0.865 | 0.825 | 0.890 |
| CT1/SD1 | 1.260 | 1.583 | 1.737 | 0.350 | 0.384 | 0.297 |
| SD10/SD1 | 2.202 | 1.411 | 1.595 | 0.886 | 1.040 | 0.920 |
| SD14/SD1 | 5.214 | 2.934 | 3.110 | 2.675 | 2.852 | 2.709 |
| ImgH/SD1 | 5.834 | 3.382 | 3.541 | 3.221 | 3.533 | 3.420 |
| FNO | 2.990 | 2.969 | 2.988 | 3.333 | 3.000 | 2.983 |
| \|f1\|/f | 3.726 | 2.953 | 2.985 | 7.074 | 7.347 | 9.357 |
| \|f2\|/f | 7.429 | 5.374 | 6.130 | 3.604 | 3.490 | 3.516 |
| f3/f | 5.519 | 3.584 | 3.752 | 3.081 | 2.704 | 3.163 |
| f4/f | 10.515 | 3.948 | 4.111 | -7.761 | -13.098 | -11.064 |
| f5/f | -10.056 | -4.964 | -5.359 | -9.652 | -4.004 | -8.461 |
| f6/f | 4.896 | 5.171 | 5.284 | 4.804 | 2.978 | 4.543 |
| f7/f | -3.009 | -2.838 | -2.682 | -2.815 | -2.523 | -2.646 |
| \|R1\|/f | 7.618 | 55.565 | 22.962 | 5.051 | 4.618 | 5.637 |
| \|R2\|/f | 2.602 | 1.588 | 1.695 | 182.555 | 57.246 | 44.194 |
| R3/f | 6.759 | 3.456 | 3.454 | 4.617 | 4.722 | 4.738 |
| \|R4\|/f | 2.804 | 1.709 | 1.796 | 3.130 | 2.936 | 2.947 |

(continued)

| Relational expression | First embodiment | Second embodiment | Third embodiment | Fourth embodiment | Fifth embodiment | Sixth embodiment |
|---|---|---|---|---|---|---|
| R5/f | 7.079 | 4.647 | 4.434 | 2.244 | 1.846 | 2.019 |
| R6/f | -4.646 | -3.010 | -3.343 | -5.211 | -5.512 | -8.119 |
| |R7|/f | 3.467 | 8.885 | 5.611 | 7.030 | 5.285 | 14.800 |
| |R8|/f | 7.907 | 2.916 | 3.765 | 23.638 | 13.237 | 16.157 |
| R9/f | -9.101 | -1.611 | -1.789 | -4.334 | -4.258 | -15.168 |
| |R10|/f | 26.370 | 3.803 | 4.457 | 12.998 | 8.072 | 9.729 |
| R11/f | 1.175 | 1.157 | 1.079 | 1.302 | 1.017 | 1.062 |
| R12/f | 1.383 | 1.495 | 1.302 | 1.929 | 1.866 | 1.519 |
| |R13|/f | 9.196 | 10.372 | 34.533 | 27.393 | 13.366 | 23.122 |
| R14/f | 2.213 | 1.314 | 1.453 | 1.647 | 1.218 | 1.344 |

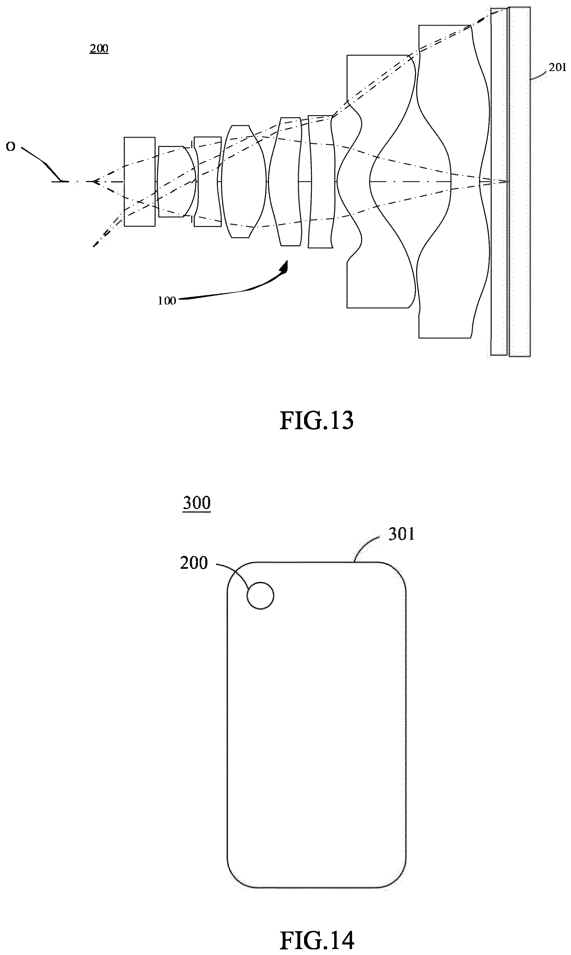

Referring to FIG. 13, the present disclosure also discloses an image module 200. The image module 200 includes an imaging sensor 201 and the optical lens 10 as described in any of the above embodiments. The imaging sensor 201 is arranged on the imaging side of the optical lens 10. A photosensitive surface of the imaging sensor 201 is located on the image plane 101 of the optical lens 10, and the light from the object passing through the lenses and transmitted to the photosensitive surface can be converted into an electrical signal of the image. The imaging sensor 201 may be a complementary metal oxide semiconductor (CMOS) or a charge-coupled device (CCD). The image module 200 may be an imaging module integrated in an electronic device 30 or an independent lens. It can be understood that the image module 200 with the above-mentioned optical lens 100 also has all the technical effects of the above-mentioned optical lens 100. That is, the image module 200 can have a larger field of view while can meet the design requirements of miniaturization of the optical lens 100. Since the above technical effects have been described in detail in the embodiments of the optical lens 100, they will not be repeated here.

Referring to FIG. 14, the present disclosure also discloses a terminal device 300. The terminal device 300 includes a housing 301 and the above-mentioned image module 200. The image module 200 is arranged in the housing 301. The terminal device 300 may be, but is not limited to, a mobile phone, a tablet, a laptop, or a smart watch. Referring to FIG. 14, the terminal device 300 is a mobile phone, and the image module 200 is arranged in the housing 301. It can be understood that the terminal device 300 with the above-mentioned image module 200 also has all the technical effects of the above-mentioned optical lens 100. That is, the terminal device 300 can have a larger field of view while can meet the design requirements of miniaturization of the optical lens 100. Since the above technical effects have been described in detail in the embodiments of the optical lens 100, they will not be repeated here.

The optical lens, image module and terminal device disclosed in the embodiments of the present invention have been introduced in detail above. Specific examples are used in this application to illustrate the principles and implementation methods of the present invention. The description of the above embodiments is only used to help understand the optical lens, image module and electronic device of the invention and its core idea; at the same time, for those of ordinary skill in the field, there will be changes in the specific implementation and application scope based on the ideas of the present invention. In summary, the content of this description should not be understood as a limitation of the present invention.

**Claims**

1.    An optical lens (100), from an object side to an imaging side along an optical axis (O), sequentially comprising:

a first lens (L1) having refractive power;
a second lens (L2) having refractive power, an object side surface (S3) of the second lens (L2) being convex near the optical axis (O);
a third lens (L3) having positive refractive power, an object side surface (S5) and an imaging side surface (S6) of the third lens (L3) being both convex near the optical axis (O);
a fourth lens (L4) having refractive power;

a fifth lens (L5) having negative refractive power, an object side surface (S9) of the fifth lens (L5) being concave near the optical axis (O);

a sixth lens (L6) having positive refractive power, an object side surface (S11) of the sixth lens (L6) being convex near the optical axis (O), and an imaging side surface (S12) of the sixth lens (L6) being concave near the optical axis (O); and

a seventh lens (L7) having negative refractive power, an imaging side surface (S14) of the seventh lens (L7) being concave near the optical axis (O);

the optical lens (100) satisfying following conditional expressions:

$$2.6 < FNO < 4, \text{ and } 50\deg < FOV < 90\deg;$$

wherein, FNO is an aperture number of the optical lens (100), and FOV is the maximum field of view of the optical lens (100).

2. The optical lens (100) of claim 1, wherein the optical lens (100) further comprises an image plane (IMG), the optical lens (100) further satisfies at least one of following conditional expressions:

$$9 < TTL/f < 14,$$

$$2 < ImgH/ObjH < 3.5,$$

and

$$1.5 < TTL/ImgH < 3,$$

wherein, TTL is a distance from an object side surface (S1) of the first lens (L1) to the image plane (IMG) of the optical lens (100) along the optical axis (O), f is a focal length of the optical lens (100), ImgH is half of an image height corresponding to the maximum field of view angle of the optical lens (100), and ObjH is an object height of the optical lens (100).

3. The optical lens (100) of claim 1, wherein the optical lens (100) further satisfies at least one of following conditional expressions:

$$20\deg/mm < FOV/ImgH < 40\deg/mm,$$

and

$$90\deg/mm < FOV/f,$$

wherein, ImgH is half of an image height corresponding to the maximum field of view angle of the optical lens (100), and f is a focal length of the optical lens (100).

4. The optical lens (100) of claim 1, wherein the optical lens (100) further satisfies at least one of following conditional expressions:

$$0.3 < NA < 0.6,$$

and

$$0.2mm < u < 1mm,$$

wherein, NA is a numerical aperture of the object side of the optical lens (100), and u is an object distance of the optical lens (100).

5. The optical lens (100) of claim 1, wherein the optical lens (100) further satisfies at least one of following conditional

expressions:

$$2<f3/f,$$

$$2<f4/f,$$

$$f5/f<-2,$$

$$2<f6/f<6,$$

$$-5<f7/f<-1.5,$$

and

$$0.65<f3/n3<1.65,$$

wherein, f3 is a focal length of the third lens (L3), f is a focal length of the optical lens (100), f4 is a focal length of the fourth lens (L4), f5 is a focal length of the fifth lens (L5), f6 is a focal length of the sixth lens (L6), and f7 is a focal length of the seventh lens (L7).

6. The optical lens (100) of claim 1, wherein the optical lens (100) further satisfies at least one of following conditional expressions:

$$2<R3/f,$$

$$1.5<R5/f,$$

$$R6/f<-2,$$

$$R9/f<-1.2,$$

$$0.9<R11/f<1.5,$$

and

$$1.2<R12/f<2,$$

wherein, R3 is a curvature radius of the object side surface (S3) of the second lens (L2) at the optical axis (O), f is a focal length of the optical lens (100), R5 is a curvature radius of the object side surface (S5) of the third lens (L3) at the optical axis (O), R6 is a curvature radius of an imaging side surface (S6) of the third lens (L3) at the optical axis (O), R9 is a curvature radius of the object side surface (S9) of the fifth lens (L5) at the optical axis (O), R11 is a curvature radius of the object side surface (S11) of the sixth lens (L6) at the optical axis (O), and R12 is a curvature radius of the imaging side surface (S12) of the sixth lens (L6) at the optical axis (O).

7. The optical lens (100) of claim 1, wherein the optical lens (100) further satisfies at least one of following conditional expressions:

$$0.2<CT1/CT2,$$

$$1<CT3/CT4<3.4,$$

$$0.7<CT3/CT5<3.2,$$

$$0.9<CT3/CT2<3.2,$$

$$0.4<CT3/CT1<3.1,$$

$$0.9<AT67/(CT6+CT7)<1.9,$$

and

$$1.2<TD/(CT1+CT2+CT3+CT4+CT5)<2.7,$$

wherein, CT1 is a thickness of the first lens (L1) at the optical axis (O), CT2 is a thickness of the second lens (L2) at the optical axis (O), CT3 is a thickness of the third lens (L3) at the optical axis (O), CT4 is a thickness of the fourth lens (L4) at the optical axis (O), CT5 is a thickness of the fifth lens (L5) at the optical axis (O), CT6 is a thickness of the sixth lens (L6) at the optical axis (O), CT7 is a thickness of the seventh lens (L7) at the optical axis (O), AT67 is a distance from the imaging side surface (S12) of the sixth lens (L6) to an object side surface (S13) of the seventh lens (L7) at the optical axis (O), and TD is a distance from an object side surface (S1) of the first lens (L1) to the imaging side surface (S14) of the seventh lens (L7) at the optical axis (O).

8. The optical lens (100) of claim 1, wherein the optical lens (100) further satisfies at least one of following conditional expressions:

$$0.9<ET7/CT7<2.7,$$

and

$$-1.9<SAG13/CT7<-0.6,$$

wherein, ET7 is a distance from the maximum effective semi-aperture of an object side surface (S13) of the seventh lens (L7) to the maximum effective semi-aperture of the imaging side surface (S14) of the seventh lens (L7), CT7 is a thickness of the seventh lens (L7) at the optical axis (O), and SAG13 is a distance between the maximum effective aperture of an object side surface (S13) of the seventh lens (L7) to an intersection point of an object side surface (S13) of the seventh lens (L7) and the optical axis (O) in the direction of the optical axis (O).

9. The optical lens (100) of claim 1, wherein the optical lens (100) further satisfies at least one of following conditional expressions:

$$0.2<CT1/SD1<2,$$

$$0.7<SD10/SD1<2.7,$$

$$2<SD14/SD1<6,$$

and

$$3<ImgH/SD1<6,$$

wherein, CT1 is a thickness of the first lens (L1) at the optical axis (O), SD1 is the maximum effective semi-diameter on an object side surface (S1) of the first lens (L1), SD10 is the maximum effective semi-diameter on an imaging side surface (S10) of the fifth lens (L5), SD14 is the maximum effective semi-diameter of the imaging side surface (S14) of the seventh lens (L7), and ImgH is half of an image height corresponding to the maximum field of view angle of the optical lens (100).

10. The optical lens (100) of claim 1, wherein the optical lens (100) further satisfies at least one of following conditional expressions:

$$2.5 < |f1|/f < 10,$$

$$3 < |f2|/f < 8,$$

and

$$2.3 < (|f1| + |f2|)/|f7| < 6,$$

wherein, f1 is a focal length of the first lens (L1), f2 is a focal length of the second lens (L2), and f7 is a focal length of the seventh lens (L7), and f is a focal length of the optical lens (100).

11. The optical lens (100) of claim 1, wherein the optical lens (100) further satisfies at least one of following conditional expressions:

$$4 < |R1|/f,$$

and

$$1 < |R2|/f,$$

wherein, R1 is a curvature radius of the object side surface (S1) of the first lens (L1) at the optical axis (O), R2 is a curvature radius of the imaging side surface (S2) of the first lens (L1) at the optical axis (O), and f is a focal length of the optical lens (100).

12. The optical lens (100) of claim 1, wherein the optical lens (100) further satisfies following conditional expression:

$$1.5 < |R4|/f < 4,$$

$$3 < |R7|/f < 15,$$

and

$$2.8 < |R8|/f,$$

wherein, R4 is a curvature radius of the imaging side surface (S4) of the second lens (L2) at the optical axis (O), R7 is a curvature radius of the object side surface (S7) of the fourth lens (L4) L4 at the optical axis (O), R8 is a curvature radius of the imaging side surface (S8) of the fourth lens (L4) at the optical axis (O), and f is a focal length of the optical lens (100).

13. The optical lens (100) of claim 1, wherein the optical lens (100) further satisfies following conditional expression:

$$|R13|/f > 9,$$

wherein, R13 is a curvature radius of the object side surface (S13) of the seventh lens (L7) at the optical axis (O), and f is a focal length of the optical lens (100).

14. An image module (200) comprising an imaging sensor (201) and the optical lens (100) of any one of claims 1 to 13, wherein the imaging sensor (201) is arranged on the imaging side of the optical lens (100).

15. A terminal device (300) comprising a housing (301) and the image module (200) of claim 17, wherein the image module (200) is arranged in the housing (301).

FIG.1

FIG.2

FIG.3

Spherical aberration

- - - — 650nm
——— 610nm
-·-·- 555nm
············· 510nm
—··— 470nm
— — · 435nm

-0.050 -0.025 0.0 0.025 0.050
Deviation of the
focus point (mm)
(A)

Astigmatism
Image height (mm)

——— S (Sagittal)
--------- T (Tanggential)

-0.8 -0.4 0.0 0.4 0.8
Deviation of the
focus point (mm)
(B)

Distortion
Image height (mm)

-5.0 -2.5 0.0 2.5 5.0
Distortion (%)
(C)

FIG.4

FIG.5

Spherical aberration

650nm
610nm
555nm
510nm
470nm
435nm

1.00
0.75
0.50
0.25

-0.050 -0.025 0.0 0.025 0.050

Deviation of the
focus point (mm)

(A)

Astigmatism
Image height (mm)

2.30
1.72
1.15
0.57

S (Sagittal)
T (Tanggential)

-0.2 -0.1 0.0 0.1 0.2

Deviation of the
focus point (mm)

(B)

Distortion
Image height (mm)

2.30
1.72
1.15
0.57

-5.0 -2.5 0.0 2.5 5.0

Distortion (%)

(C)

FIG.6

FIG.7

Spherical aberration

650nm
610nm
555nm
510nm
470nm
435nm

1.00
0.75
0.50
0.25

-0.2   -0.1   0.0   0.1   0.2

Deviation of the
focus point (mm)

(A)

Astigmatism
Image height (mm)

T   S   2.30

1.72

1.15   —— S (Sagittal)
------- T (Tanggential)

0.57

-0.10  -0.05  0.0  0.05  0.10

Deviation of the
focus point (mm)

(B)

Distortion
Image height (mm)

2.30

1.72

1.15

0.57

-5.0  -2.5  0.0  2.5  5.0

Distortion (%)

(C)

FIG.8

**FIG.9**

Spherical aberration

650nm
610nm
555nm
510nm
470nm
435nm

-0.08 -0.04 0.0 0.04 0.08
Deviation of the
focus point (mm)
(A)

Astigmatism
Image height (mm)

S (Sagittal)
T (Tanggential)

-0.08 -0.04 0.0 0.04 0.08
Deviation of the
focus point (mm)
(B)

Distortion
Image height (mm)

-2 -1 0 1 2
Distortion (%)
(C)

**FIG.10**

**FIG.11**

Spherical aberration

1.00

65●nm
61●nm
555nm
51●nm
47●nm
435nm

-0.08 -0.04 0.0 0.04 0.08
Deviation of the
focus point (mm)
(A)

Astigmatism
Image height (mm)
2.30

1.72

1.15

0.57

-0.50 -0.25 0.0 0.25 0.50
Deviation of the
focus point (mm)
(B)

S (Sagittal)
T (Tanggential)

Distortion
Image height (mm)
2.30

1.72

1.15

-2 -1 0 1 2
Distortion (%)
(C)

**FIG.12**

FIG.13

FIG.14